(19) Europäisches Patentamt
European Patent Office
Office européen des brevets

(11) EP 2 107 090 B1

(12) EUROPEAN PATENT SPECIFICATION

(45) Date of publication and mention of the grant of the patent:
**04.07.2012 Bulletin 2012/27**

(51) Int Cl.:
***C09D 11/00*** $^{(2006.01)}$ ***C09D 17/00*** $^{(2006.01)}$

(21) Application number: **09004720.0**

(22) Date of filing: **31.03.2009**

(54) **Water-insoluble colorant dispersion, production method thereof, and recording liquid, image-forming method and image-forming apparatus using the same**

Wasserunlösliche Farbstoffdispersion, zugehöriges Herstellungsverfahren und Aufzeichnungsflüssigkeit, Bilderzeugungsverfahren und Bilderzeugungsvorrichtung, die dieses anwendet

Dispersion de colorant insoluble dans l'eau, procédé de production correspondant et liquide d'enregistrement, procédé de formation d'images et appareil de formation d'images utilisant celui-ci

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **31.03.2008 JP 2008093181**

(43) Date of publication of application:
**07.10.2009 Bulletin 2009/41**

(73) Proprietor: **FUJIFILM Corporation**
**Tokyo 106-8620 (JP)**

(72) Inventors:
- **Ishiji, Yohei**
  **Fujinomiya-shi**
  **Shizuoka 418-8666 (JP)**
- **Saito, Ryo**
  **Ashigarakami-gun**
  **Kanagawa 258-8577 (JP)**

(74) Representative: **HOFFMANN EITLE**
**Patent- und Rechtsanwälte**
**Arabellastraße 4**
**81925 München (DE)**

(56) References cited:
**EP-A- 0 556 649**
**EP-A- 0 736 582**
**EP-A- 1 201 719**
**EP-A- 1 364 997**
**EP-A- 1 548 034**
**US-A- 5 085 698**
**US-A- 5 648 405**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 107 090 B1

## Description

### FIELD OF THE INVENTION

The present invention relates to a water-insoluble colorant dispersion and a production method of the dispersion, and a recording liquid, image-forming method and image-forming apparatus using the dispersion.

### BACKGROUND OF THE INVENTION

According to an inkjet recording method, high speed recording can be performed with a high freedom degree of imaging pattern and a low noise at the time of recording. Further, image recording can be performed at low cost. Still further, the inkjet recording method has advantages such that color recording can be readily performed. Therefore, recently the inkjet recording method is rapidly spreading and further developing. As a recording liquid for the method, hitherto a dye ink, in which a water-soluble dye is dissolved in an aqueous medium, has been widely used. However, the dye ink is poor in water resistance and weather resistance of the resultant printed article (printed matter). Therefore, studies of the dye ink have been made to improve such disadvantage.

A pigment ink is ordinarily obtained by dispersing a water-insoluble pigment in an aqueous medium. The pigment ink is generally prepared in accordance with a breakdown method. Namely, it is general to use a method which includes adding a pigment together with one or plurality of dispersants such as various kinds of surfactants or water-soluble polymers to an aqueous solvent, and pulverizing them using a dispersing device such as a sand mill, a bead mill, or a ball mill, to make the diameter of the pigment particle small to fine (see JP-A-2006-57044 ("JP-A" means unexamined published Japanese patent application) and JP-A-2006-328262). Besides, it is proposed to make pigments a solid solution in consideration of improving a coloring force and weather resistance (see JP-A-60-35055).

On the other hand, a build-up method for generating pigment fine particles in a liquid phase is under a feasibility study. For example, studies have been made of a method for preparing a pigment dispersion liquid by dissolving an organic pigment together with a polymer dispersant or a polymer compound as a dispersant in an aprotic organic solvent in the presence of alkali, and then mixing the resultant solution with water, and of the predetermined polymer compounds per se and the like that are used in the above-described method (see JP-A-2003-26972, JP-A-2004-43776, JP-A-2006-342316, and JP-A-2007-119586). However, because a primary or secondary particle size easily enlarges during stock in the pigment dispersion liquid made by these techniques, sufficient storage stability is denied and further improvement of storage stability was demanded.

### SUMMARY OF THE INVENTION

The following are embodiments of the present invention :

1. A dispersion comprising fine particles of a water-insoluble colorant having an average particle diameter of 10-45 nm, as measured using a transmission electron microscope, a polymer dispersant having a cationic group and an acid group, an aqueous medium, and at least one of a phase transfer base and an inorganic base, the dispersion being obtainable by dissolving the water-insoluble colorant, polymer dispersant and phase transfer base/inorganic base together in an organic solvent and generating fine particles of the water-insoluble colorant by mixing the solution with an aqueous medium;
wherein:

    the water-insoluble colorant is an organic pigment selected from quinacridone organic pigments, diketopyrrolopyrrole organic pigments and mono-azo yellow organic pigments;
    the phase transfer base is represented by one of the following Formulae (I) and (II):

Formula (I)

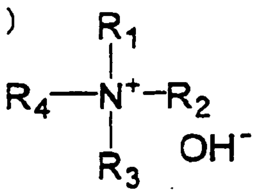

Formula (II)

$$R_{5(4-k)}-N^{+}-(CH_2CH_2OH)_k \quad OH^{-}$$

wherein $R_1$ to $R_5$ each independently represents an alkyl, aryl or alkylaryl group having 1 to 10 carbon atoms; and k represents an integer of 1 to 4; and

the polymer dispersant contains a repeating unit represented by one of the following Formulae (1) and (2):

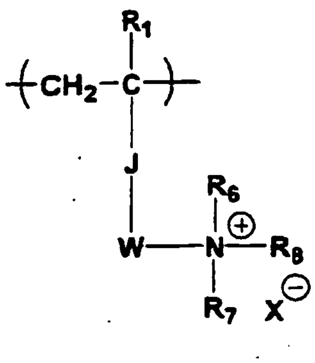

Formula (1)

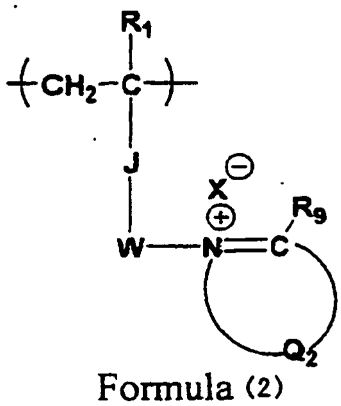

Formula (2)

wherein $R_1$ represents a hydrogen atom or a substituent; $R_6$ to $R_8$ each independently represents a substituent; $R_9$ represents a hydrogen atom or a substituent; J represents -CO-, -COO-, $-CONR^{10}-$, -OCO-, a methylene group, a phenylene group or $-C_6H_4CO-$; $R^{10}$ represents a hydrogen atom, an alkyl group, an aryl group or an aralkyl group; W represents a single bond or a divalent linking group; $Q_2$ represents a group of atoms forming an unsaturated ring together with the carbon atom and the nitrogen atom; and $X^-$ represents an anionic group which balances the cationic charge on the nitrogen atom.

2. A dispersion according to 1, wherein the polymer dispersant has a combination of repeating units represented by one of the following Formulae (3) and (4):

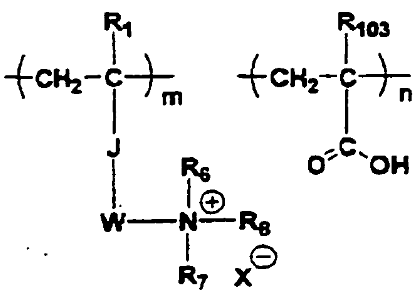

Formula (3)

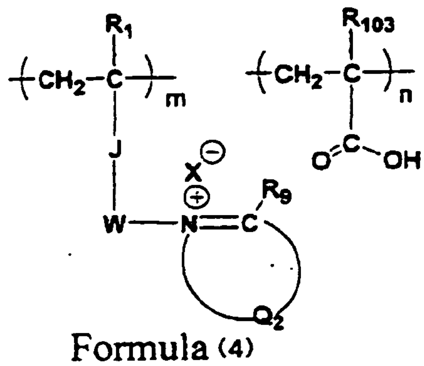

Formula (4)

wherein $R_1$, $R_6$ to $R_{10}$, J, W, $Q_2$ and $X^-$ are as defined in Claim 1; $R_{103}$ represents a hydrogen atom or a substituent; and m and n each independently represents the mass composition ratio of the repeating units.

3. A dispersion according to 2, wherein Formula (3) is represented by one of the following Formulae (5) and (6):

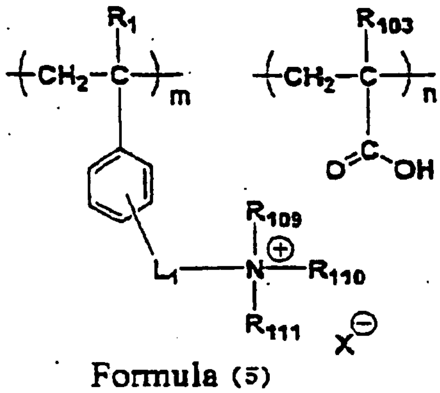

Formula (5)

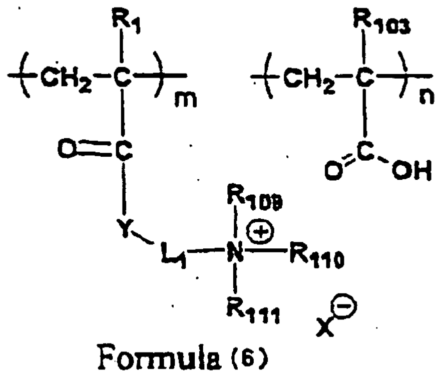

Formula (6)

wherein $R_{109}$ to $R_{111}$ each independently represents a substituted or unsubstituted alkyl group, aryl group or aralkyl group; $L_1$ represents a substituted or unsubstituted alkylene group, ether group, carbonyl group, urethane group, amido group, arylene group or heteroarylene group, the benzene ring connected to $L_1$ in Formula (5) being substituted or unsubstituted; Y represents an oxygen atom, a sulfur atom or $NR_{113}$; $R_{113}$ represents a hydrogen atom or a substituted or unsubstituted alkyl group, alkoxy group, aryl group or heteroaryl group; and $R_1$, $R_{103}$, $X^-$, m and n are as defined in Claim 2.

4. A dispersion according to 1 or 2, wherein the polymer dispersant has a combination of repeating units represented by one of the following Formulae (7), (8) and (9):

Formula (7)

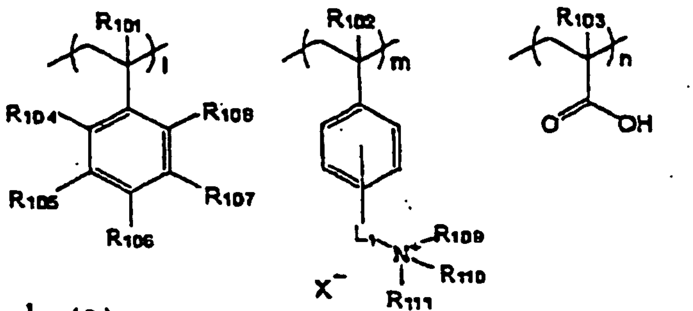

Formula (8)

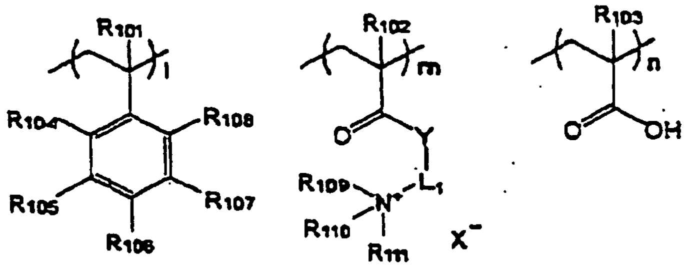

Formula (9)

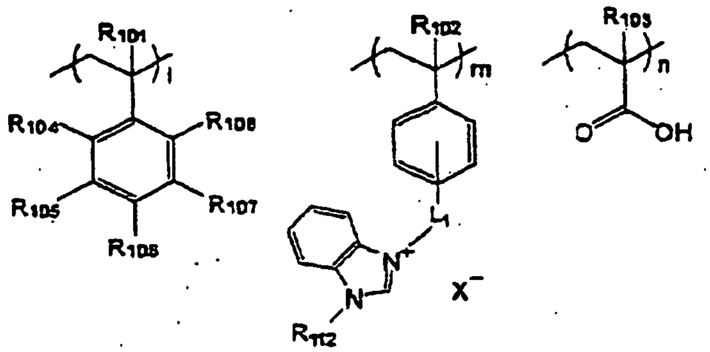

wherein $R_{101}$ to $R_{103}$ each independently represents a hydrogen atom or a methyl group; $R_{104}$ to $R_{108}$ each independently represents a hydrogen atom, a halogen atom, a substituted or unsubstituted alkyl group, alkoxy group, hydroxy group, thioalkoxy group, ester group, amido group, ketone group, cyano group, aryl group or heteroaryl group, members of $R_{104}$ to $R_{108}$ optionally bonding together to form a ring; $R_{109}$ to $R_{111}$ each independently represents a substituted or unsubstituted alkyl group, aryl group or aralkyl group; 1, m and n each independently represents the mass composition ratio of the repeating units, wherein 1 + m + n = 100; $X^-$ represents an anionic group which balances the cationic charge on the nitrogen atom; $L_1$ represents a substituted or unsubstituted alkylene group, ether group, carbonyl group, urethane group, amido group, arylene group or heteroarylene group, the benzene ring connected to $L_1$ in Formula (7) and Formula (9) being substituted or unsubstituted; Y represents an oxygen atom, a sulfur atom or $NR_{113}$; $R_{112}$ represents a substituted or unsubstituted alkyl group, aryl group or aralkyl group, the benzimidazole group connected with $L_1$ in Formula (9) being optionally further substituted; and $R_{113}$ represents a hydrogen atom or a substituted or unsubstituted alkyl group, alkoxy group, aryl group or heteroaryl group.

5. A dispersion according to any of 1-4, wherein the cationic group of the polymer dispersant is a quaternary ammonium group.

6. A dispersion according to any of 1-5, wherein the volume-averaged diameter of the colorant particles, as measured by dynamic light scattering, is 50 nm or less.

7. A recording liquid comprising a dispersion according to any of 1-6, wherein the water-insoluble colorant is contained in the liquid in an amount of 0.1 to 15% by mass with respect to the total mass of the liquid.

8. A recording liquid according to 7, wherein the liquid is suitable for inkjet recording.

9. An image-forming method comprising the step of recording an image on a medium using a recording liquid according to 7 or 8.

10. A method for producing a dispersion as defined in any of 1-5 comprising the steps of:

dissolving a water-insoluble colorant, a polymer dispersant having a cationic group and an acid group, and at least one of a phase transfer base and an inorganic base together in an organic solvent; and
generating fine particles of the water-insoluble colorant by mixing the solution with an aqueous medium.

11. A method according to 10, further comprising the steps of:

producing an aggregate of the fine particles of the water-insoluble colorant by mixing the dispersion with at least one of an organic acid and an inorganic acid;
decomposing the aggregate by mixing the aggregate with an aqueous medium and at least one of an organic base and an inorganic base; and
re-dispersing the aggregate.

DETAILED DESCRIPTION OF THE INVENTION

Hereinafter, the present invention is explained in detail.

The inventors have found that allowing a specific polymer dispersant having a cationic group and acid group, and a phase transfer base or an inorganic base to coexist with fine particles of a water-insoluble colorant enables a favorable dispersibility reluctantly causing a secondary aggregate and a long term storage stability to be compatible even though the fine particles are in an extremely minute state of a nanometer size.

The dispersion of the present invention contains fine particles of a water-insoluble colorant, a polymer dispersant having a cationic group and acid group, an aqueous medium and a phase transfer base or an inorganic base.

Specific examples of the polymer dispersant (hereinafter, occasionally referred as the specific polymer dispersant) having the cationic group and acid group used for the dispersion of the present invention include block-copolymers, random copolymers, or graft copolymers, or modified materials of these copolymers and salts thereof, each of which is composed of at least two monomer components selected from styrene, styrene derivative, vinylnaphthalene, vinylnaphthalene derivative, aliphatic alcohol esters of $\alpha,\beta$-ethylenycally unsaturated carboxylic acid, acrylic acid, acrylic acid derivative, methacrylic acid, methacrylic acid derivative, maleic acid, maleic acid derivative, alkenyl sulfonic acids, vinyl amines, allyl amines, itaconic acid, itaconic acid derivative, fumaric acid, fumaric acid derivative, vinyl acetate, vinyl phosphoric acid, vinyl pyrrolidone, acrylamide, N-vinyl acetoamide, N-vinylformamide, and derivative compounds thereof, with the proviso that at least one of those is a monomer having a functional group becoming an acid group, and at least one of those is selected from monomers forming a repeating unit represented by Formula (1) or Formula (2).

The acid group of the specific polymer dispersant is preferably a carboxylic acid group, a sulfonic acid group or a phosphoric acid group, more preferably a carboxylic acid group or a sulfonic acid group, and still more preferably a carboxylic acid group.

The acid value of the polymer dispersant is preferable in the range of 100 mg-KOH/g to 300 mg-KOH/g, more preferably in the range of 140 mg-KOH/g to 240 mg--KOH/g.

The repeating units represented by Formula (1) and (2) have a cationic group which forms a salt structure with an organic or inorganic anion. However, the salt structure may dissociate among the dispersion. Regarding the anions, all the organic or inorganic anion species are nominated and specific examples include organic carboxylic acids, organic sulfonic acids, organic disulfonamides, halogen (chlorine, bromine, iodine), inorganic anion species (tetrafluoroborate, hexafluorophosphate). However in the present invention, those being capable of adopting all anionic structure may be used without being limited thereto. More preferable examples are the halogens or the inorganic anions, and further preferable examples are tetrafluoroborate or hexafluorophosphate.

In more detail, the specific polymer dispersants that can be used in the dispersion of the present invention are preferably composed of a hydrophilic group portion (a repeating unit having a hydrophilic group) and a hydrophobic group portion (a repeating unit having a hydrophilic group). As the specific polymer dispersants, it is preferable to use copolymers that can be obtained by copolymerizing a hydrophilic monomer component and a hydrophobic monomer component. When polymer dispersants that are composed of only hydrophobic monomer components are used, it sometimes becomes difficult to impart good dispersion stability to a water-insoluble colorant. It should be noted that the term "hydrophilic" means a good affinity with water and a high water solubility, whereas the "hydrophobic" means a poor affinity with water and a sparse water solubility. A polymerization composition ratio of the hydrophilic group portion in the specific polymer dispersant is not particularly limited; however, it is preferable to be from 10 to 50.

The hydrophobic monomer component is, for example, a monomer component having, as its structural unit, a hydrophobic unit such as a long-chain alkyl group having 8 or more carbon atoms or a t-butyl group, phenyl group, biphenyl group or naphthyl group. For providing a water-insoluble colorant with high dispersion stability, monomer components containing block segments having a hydrophobic monomer such as styrene or stearyl methacrylamide as the repeating unit are preferable, but the hydrophobic monomer component is not limited thereto.

Examples of the hydrophilic monomer component include monomer components containing, as a structural unit, a hydrophilic unit having a functional group such as the aforementioned acid group (preferably a carboxylic acid group, a sulfonic acid group, or a phosphoric acid group). Specifically, examples of the hydrophilic monomer include acrylic acid or methacrylic acid; carboxylic acid salts such as inorganic salts or organic salts of acrylic acid. However, the hydrophilic monomer component is not limited to these materials.

The other examples include a monomer component containing the hydrophilic unit of a structure having a functional group such as the cationic groups (preferably an ammonium group) as a unit structure.

In Formula (1), $R_6$ to $R_8$ each independently represents a substituent. $X^-$ represents an anion group balancing the cation electric charge on the nitrogen atom. $R_1$ represents a hydrogen atom or a substituent. J represents -CO-, -COO-, $-CONR^{10}-$, -OCO-, methylene group, phenylene group or a $-C_6H_4CO-$group. $R^{10}$ represents a hydrogen atom, an alkyl group, an aryl group or an aralkyl group. W represents a single bond or a divalent linking group.

In Formula (2), $R_9$ represents a hydrogen atom or a substituent. $Q_2$ represents a group of atoms which is necessary for forming an unsaturated ring together with a carbon atom and a nitrogen atom. $R_1$, J, and W each independently represents the same definition as $R_1$, J, and W in Formula (1) respectively.

Further, it is preferred that the polymer dispersant is a compound having a repeating unit combination represented by Formula (3) or Formula (4).

In Formula (3), $R_6$ to $R_8$ each independently represents a substituent. $X^-$ represents an anion group balancing with the cation electric charge on the nitrogen atom. $R_1$ represents a hydrogen atom or a substituent. J represents -CO-, -COO-, -CONR$^{10}$-, -OCO-, methylene group, phenylene group or a -$C_6H_4$CO-group. $R^{10}$ represents a hydrogen atom, an alkyl group, an aryl group or an aralkyl group. W represents a single bond or a divalent linking group. $R_{103}$ represents a hydrogen atom or a substituent. m and n each independently represents mass composition ratio of the repeating unit

In Formula (4), $R_9$ represents a hydrogen atom or a substituent. $Q_2$ represents a group of atoms which is necessary for forming an unsaturated ring together with a carbon atom and a nitrogen atom. $R_{103}$, $R_1$, J, W, m and n each independently represents the same definition as $R_{103}$, $R_1$, J, W, m and n in Formula (3) respectively.

It is preferred the Formula (3) is represented by the Formula (5) or (6).

In Formula (5), $R_{109}$ to $R_{111}$ each independently represents a substituted or unsubstituted alkyl group, aryl group or aralkyl group. $L_1$ represents a substituted or unsubstituted alkylene group, ether group, carbonyl group, urethane group, amido group, arylene group or heteroarylene group. $L_1$ is connected with a substituted or unsubstituted benzene ring. $X^-$, $R_1$, $R_{103}$, m and n each independently represents the same definition as $X^-$, $R_1$, $R_{103}$, m and n in Formula (3) respectively.

In Formula (6), Y represents an oxygen atom, a sulfur atom, and $NR_{113}$; $R_{113}$ represents a hydrogen atom, a substituted or unsubstituted alkyl group, alkoxy group, aryl group or heteroaryl group. $R_{103}$, $R_{109}$ to $R_{111}$, $L_1$, $X^-$, m and n each independently represents the same definition as $R_{103}$,$R_{109}$ to $R_{111}$, $L_1$, $X^-$, m and n in Formula (5) respectively.

In the present invention, it is specifically preferable that the polymer dispersant is a polymer compound having a repeating unit represented by the Formula (7), (8) or (9).

In Formula (7), $R_{101}$ to $R_{103}$ each independently represents a hydrogen atom or a methyl group. $R_{104}$ to $R_{108}$ each independently represents a hydrogen atom, a halogen atom, a substituted or unsubstituted alkyl group, alkoxy group, hydroxy group, thioalkoxy group, ester group, amido group, ketone group, cyano group, aryl group or heteroaryl group. In this occasion, $R_{104}$ to $R_{108}$ may bond together to form rings. $R_{109}$ to $R_{111}$ each independently represents a substituted or unsubstituted alkyl group, aryl group or aralkyl group. l, m and n each independently represents a mass composition ratio of the repeating unit respectively, and 1 + m + n = 100. $X^-$ represents an anion group balancing with cation electric charges on nitrogen atoms. $L_1$ represents a substituted or unsubstituted alkylene group, ether group, carbonyl group, urethane group, amide group, arylene group or hetero arylene group. $L_1$ is connected with a substituted or unsubstituted benzene ring.

In Formula (8), $R_{101}$ to $R_{111}$, $X^-$ and $L_1$ each independently represents the same definition as in Formula (7) respectively. Y represents an oxygen atom, a sulfur atom, and $NR_{113}$; $R_{113}$ represents a hydrogen atom, a substituted or unsubstituted alkyl group, alkoxy group, aryl group or heteroaryl group.

In Formula (9), $R_{101}$ to $R_{108}$, $X^-$ and $L_1$ each independently represents the same definition as in Formula (7) respectively. Y represents the same definition as in Formula (8). $R_{112}$ represents a substituted or unsubstituted alkyl group, aryl group or aralkyl group. A benzimidazole group connected with $L_1$ may be further substituted, that is, 2-, 4-, 5-, 6- and 7-position at the benzimidazole group may be substituted.

$R_{104}$ to $R_{108}$ each are preferably a hydrogen atom or a substituted or unsubstituted alkyl group, and more preferably a hydrogen atom, a methyl group or an ethyl group.

$R_{109}$ to $R_{111}$ each are preferably a substituted or unsubstituted alkyl or aralkyl group, more preferably an alkyl group, and further preferably an alkyl group having 1 to 8 carbon atoms.

Y is preferably $NR_{123}$, and more preferably NH.

It is that $L_1$ preferably represents a substituted or unsubstituted alkylene group or arylene group, more preferably an alkylene group, an arylene group or a combination of these, and particularly preferably a methylene group, an ethylene group, a propylene group, a phenylene group, or -$(CH_2)C_6H_5$-.

It is preferable for 1 to be from 20 to 60 (mass composition ratio), and more preferable to be from 30 to 50 (mass composition ratio). It is preferable for m to be from 0 to 75 (mass composition ratio), more preferable to be from 5 to 45 (mass composition ratio), and particularly preferable to be from 5 to 25 (mass composition ratio). It is preferable for n to be from 10 to 50 (mass composition ratio), and more preferable to be from 20 to 40 (mass composition ratio).

Additionally, a terminal group in the polymer dispersant having the repeating unit represented by any of Formulae (1) to (8) is not particularly limited, and it may be a hydrogen atom or a polymerization terminator residue group. In addition, although the cationic group is shown as in the state of positively ionized, a counter ion in this occasion is not particularly limited and examples include $Cl^-$, $Br^-$, $I^-$ or the like.

A ratio of the specific polymer dispersant to be contained in the dispersion is not particularly limited; however, it is preferable that the polymer dispersant is contained in an amount of effectively functioning as the dispersant of the water-insoluble colorant. Specifically, it is preferable to be 0.05 mass parts or more with respect to 1 mass part of the water-insoluble colorant, and when an aprotic organic solvent is used, it is preferable to use within the range of 50 mass

parts or less with respect to 100 mass parts of the solvent. When the specific polymer dispersants are too much, there may be a case where it is difficult to completely dissolve the polymer dispersant; and when they are too little, there may be a case where it is difficult to get a sufficient dispersion effect. Further, only a single specific polymer dispersant may be used, or, alternatively, two or more specific polymer dispersants may be used in combination.

The molecular weight of the polymer dispersant is not particularly limited, but is preferably in the range of 5,000 to 100,000, and more preferably from 10,000 to 50,000 in terms of the mass average molecular weight respectively. It should be noted that when described simply as a molecular weight in the present invention, the molecular weight means a mass average molecular weight, and the mass average molecular weight, unless indicated otherwise, means an average molecular mass calculated in terms of polystyrene that is measured by gel permeation chromatography (carrier: tetrahydrofuran). It should be also noted that the term "dispersion" that is used in the present invention means a composition having prescribed fine particles dispersed therein. The form of the dispersion is not particularly limited. The dispersion is used as a meaning to embrace a liquid composition (dispersion liquid), a past-like composition, and a solid composition.

The state of the specific polymer dispersant contained in the dispersion is not particularly limited, and may be contained independently of other components or together with other components. Thus, in the "dispersion containing the water-insoluble colorant fine particles together with the specific polymer dispersant" in the present invention, the polymer dispersant may be contained in the water-insoluble colorant fine particles in the dispersion or separately with the fine particles in the dispersion. Accordingly, the state in which part of the polymer dispersant may be in dissociation equilibrium between adsorption on and release from the fine particles, is also included in the concept. The same is true for the components other than the specific polymer dispersant, such as the phase-transfer base described below. However, with respect to the phase-transfer base, from the viewpoint of its function, the state of the base contained is preferably the state in which the base is present on the surface of the fine particles.

Next, the following compounds (D-1) to (D-22) are exemplified as the preferred specific polymer dispersant used in the present invention; however, the present invention is not limited to those. Additionally in the Formula, Hex represents a hexyl group, Ph represents a phenyl group, Me represents a methyl group, and Bu represents a butyl group respectively.

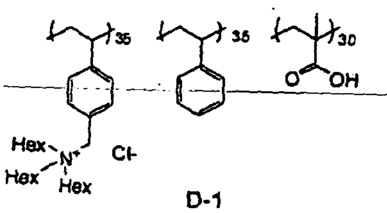

D-1

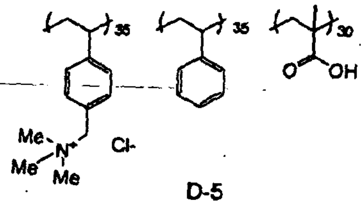

D-5

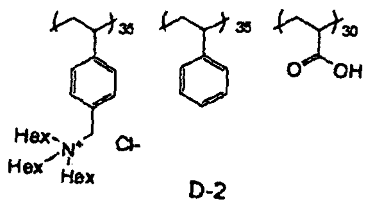

D-2

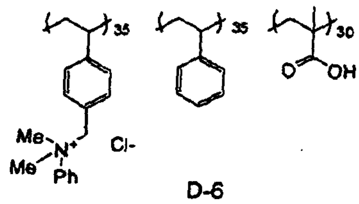

D-6

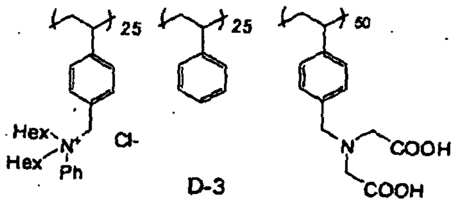

D-3

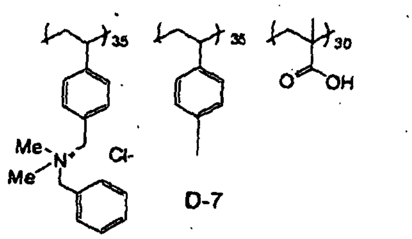

D-7

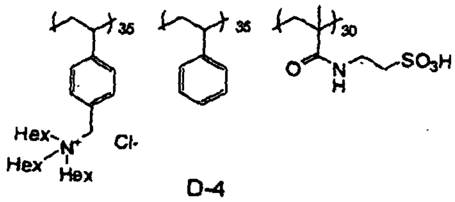

D-4

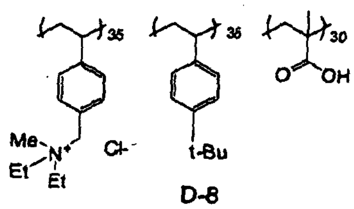

D-8

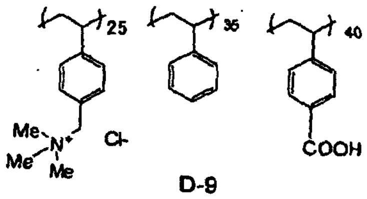

D-9

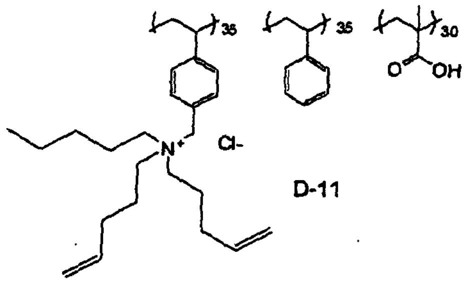

D-11

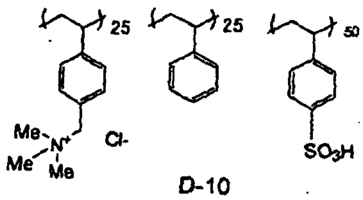

D-10

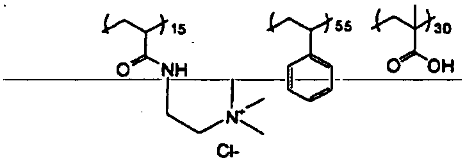

D-12

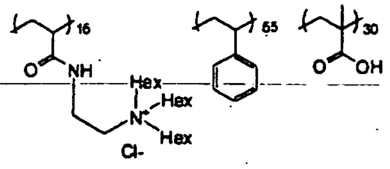

D-16

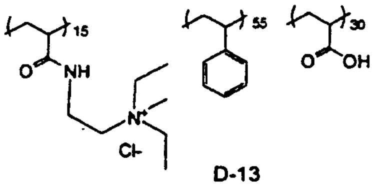

D-13

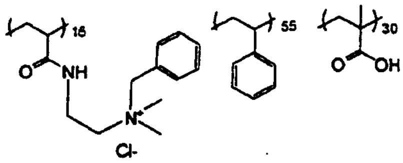

D-17

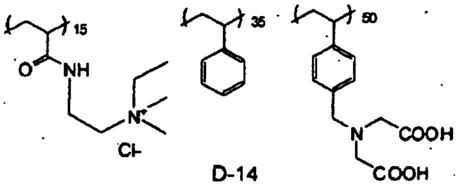

D-14

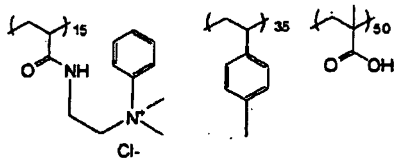

D-18

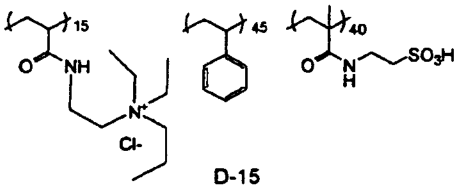

D-15

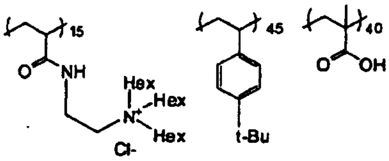

D-19

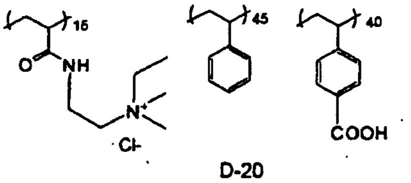

D-20

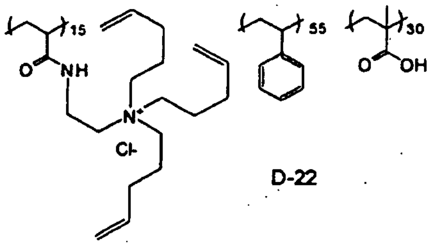

D-22

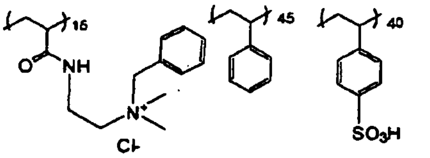

D-21

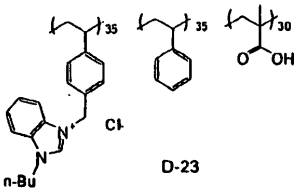

D-23

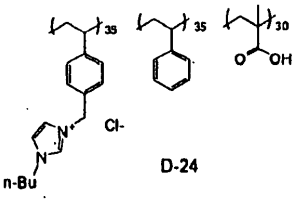

D-24

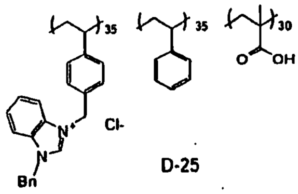

D-25

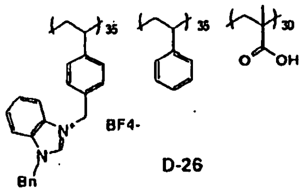

D-26

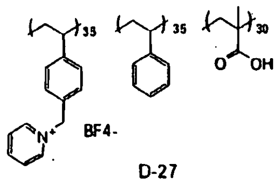

D-27

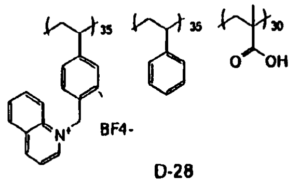

D-28

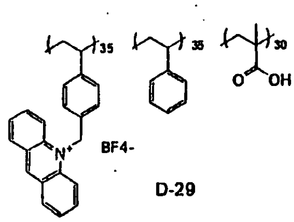

D-29

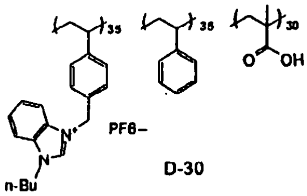

D-30

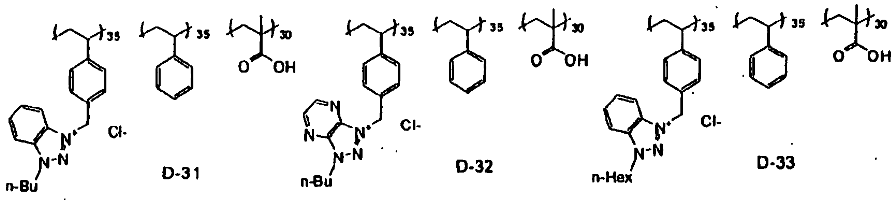

D-31 D-32 D-33

The ClogP value of the phase transfer base is preferably negative and more preferably less than -2. The term "ClogP value" as used herein means a common logarithmic value of a 1-octanol/water partition coefficient P, which represents a ratio of an equilibrium concentration of a compound in 1-octanol to an equilibrium concentration of the compound in water. This ClogP value is determined by a fragment approach based on the chemical structure of the compound (A. Leo, Comprehensive Medical Chemistry, Vol.4; C. Hansch, P. G. Sammens, J. B. Taylor and C. A. Ramden, Eds., p. 295, Pergramon Press, 1990), and is defined by a value calculated by the "CLOGP" program available from Daylight Chemical Information Systems, Inc.

In formula (I) and formula (II) representing the phase transfer base, $R_1$ to $R_5$ each represents an alkyl group, aryl group or alkyl aryl group each having 1 to 10 carbon atoms, preferably a methyl group, ethyl group, n-propyl group, phenyl group or benzyl group, more preferably a methyl group, ethyl group or n-propyl group. Specifically, alkyl ammonium compounds are preferable, and more preferable examples include choline hydroxide, tetramethylammonium hydroxide, tetraethylammonium hydroxide and tetrapropylammonium hydroxide.

It is preferable for the phase transfer base in the present invention that a pair of skeletons of its base part does not have high hydrophobic property, and it is preferable that the number of carbon atoms in each alkyl chain is 3 or less. This is from the viewpoint that suppressing the hydrophobic property due to the alkyl chain enables to elevate the storage stability of the dispersion of a water-insoluble colorant. Further, the use of the phase transfer base enables to remarkably accelerate re-dispersion of the aggregate as compared with dispersion by a normal metal alkali. It is conceivable that the specific polymer dispersant together with the water-insoluble fine particles are allowed to easily penetrate into the aggregation layer to be configured because the phase transfer base in water layer shows the phase transfer property.

In the present invention, it is not clear about the function mechanism in which making the specific polymer dispersant and the phase transfer base to coexist in the dispersion improves the dispersibility of the fine particles of a water-insoluble colorant. Including estimation, because the solubility of the phase transfer base neutralization substance of the specified polymer dispersant in the whole dispersion is adequately low, while a hydrophilic part hydrates, a hydrophobic part can adsorb onto the surface of the fine particles due to a hydrophobic interaction, it is conceivable that a separation of the specific polymer dispersant from the surface of the fine particles induced by a relationship with an adsorption equilibrium is suppressed. Alternatively, in the dissolved solution of the water-insoluble colorant to be used in formation of the fine particles, a salt exchange between the cationic part of the phase transfer base and the cationic group in the specified polymer dispersant can occur. Accordingly, it is also conceivable that when the fine particles of the water-insoluble colorant generate, the specific polymer dispersant is effectively taken into the fine particles, the separation of the specific polymer dispersant from the surface of the fine particles can be suppressed.

In the present invention, the "base" or "base structural part" is a compound or a structural part that dissociates in a liquid such as water and releases a hydroxide ion ($OH^-$). However, the base may be present in the liquid in the state completely dissociated to the ion. Accordingly, the "base" or "base structural part" generates a particular cation and a hydroxide ion (anion) by dissociation in a water-containing liquid such as aqueous solution or aqueous dispersion. The water-containing liquid is considered to contain the "base" or "base structural part", if the cation is detected even if the hydroxide ion is not confirmed. The method of detecting and quantitative analyzing the base in the present invention is not particularly limited, but the structure can be identified for example by H-NMR analysis or liquid chromatography commonly used in identification of compound and the content can be determined by neutralization titration.

In the dispersion of the present invention, it is also preferable to use an inorganic base instead of the phase transfer base or in combination with the phase transfer base. Regarding with the inorganic base, an alkali to be contained into the aprotic water soluble organic solvent is a base represented by the foregoing general formula (I) or (II); and inorganic bases such as sodium hydroxide, potassium hydroxide, cesium hydroxide, lithium hydroxide, magnesium hydroxide, calcium hydroxide, and barium hydroxide; inorganic bases or organic bases such as diazabicyclo undecene (DBU), sodium methoxide, tert-butoxy sodium, and metalalkoxide such as tert-butoxy potassium or so can be used as occasion demands.

As described above, the production method of the present invention enables to use favorite materials selecting from among the phase transfer base and inorganic base depending on requirement on an appropriate application. For example, when the necessity of suppressing or preventing contamination and corrosion of the electrodes in the device

due to a very small amount of metal ion remaining after preparing the dispersion is high, a selected use of the phase transfer base can meet this requirement. In addition, although an extremely complicated treatment manipulation is usually needed in removal of ions in the medium, the present invention enables to obtain the desired dispersion by selecting the above favorable base without needing the roundabout process. Therefore, manufacturing of precision equipments or fine chemicals products can be responded.

A use ratio of the phase transfer base or the inorganic base is not is particularly limited, however, considering about commonly dissolving the water-insoluble colorant and the above specified polymer dispersant into the organic solvent to be used in the preparation of the dispersion described below, the phase transfer base or the inorganic base is used in a mole ratio of from 1.0 to 100 mole equivalents with respect to the water-insoluble colorant. The mole ratio is more preferably from 1.5 to 50 mole equivalents, and particularly preferably from 2.0 to 20 mole equivalents.

Further, the amount of the phase transfer base or the inorganic base to be used when re-dispersing the aggregate containing the water-insoluble colorant provided from dispersion of a water-insoluble colorant/the above specific polymer dispersant is preferably from 0.5 to 10 mole equivalents with respect to 1 mole equivalent of the acid group possessed by the specific polymer dispersant. The amount is more preferably from 0.8 to 5 mole equivalents, and particularly preferably from 0.9 to 1.5 mole equivalents.

Examples of the organic pigment include quinacridone-compound pigments, such as C.I. Pigment Violet 19, C.I. Pigment Violet 42, C.I. Pigment Red 122, C.I. Pigment Red 192, C.I. Pigment Red 202, C.I. Pigment Red 207, and C.I. Pigment Red 209; and diketopyrrolopyrrole-compound pigments, , such as C.I. Pigment Red 254, C.I. Pigment Red 255, C.I. Pigment Red 264, C.I. Pigment Red 272, C.I. Pigment Orange 71, and C.I. Pigment Orange 73;

In the dispersion of the present invention, a content of the water-insoluble colorant in the dispersion is not particularly limited. In consideration of application to an ink, for example, it is preferably from 0.01% by mass to 30% by mass, more preferably from 1.0% by mass to 20% by mass, and most preferably from 1.1 % by mass to 15 % by mass.

The dispersion according to the present invention may be kept less viscous, even when it is highly concentrated. For example, when used as a recording liquid, the dispersion, if it is less viscous even if it is highly concentrated, allows expansion in the degree of freedom of selecting the kind and the addition amount of the additive used in the recording liquid, and thus, the dispersion according to the present invention can be used favorably as recording liquid.

The water-insoluble colorant dispersion according to the present invention is produced by a method comprising the step of codissolving the water-insoluble colorant and the polymer dispersant having a cationic group and an acid group (preferably a carboxylic acid group, a sulfonic acid group and a phosphoric acid group) in an organic solvent in the presence of the phase-transfer base represented by Formula (I) or (II) or the inorganic base, and the step of mixing the solution obtained in the first step with an aqueous medium, thereby generating the water-insoluble colorant fine particles.

The organic solvent for use in the production method according to the present invention may be any solvent, either an aprotic or protic organic solvent. However, the organic solvent dissolving the water-insoluble colorant and the polymer compound in the presence of an alkali is preferably an aprotic organic solvent, more preferably dimethylsulfoxide, N-methylpyrrolidone, dimethylformamide, dimethylacetamide, sulfolane, or the like. In addition, these organic solvents may be used alone or in combination of two or more.

The ratio of the organic solvent to the water-insoluble colorant in the solution is not particularly limited, but preferably in the range of 2 to 500 parts by mass, more preferably in the range of 5 to 100 parts by mass, with respect to 1 part by mass of the the water-insoluble colorant, for more favorable solubilization state of the water-insoluble colorant.

In the method of producing a water-insoluble colorant dispersion according to the present invention, the solution containing the water-insoluble colorant and others and an aqueous medium are mixed with each other. In the present invention, the aqueous medium is water alone or a mixed solvent of water and a water-soluble organic solvent. The organic solvent is preferably added, when water alone is insufficient for keeping the pigment and the dispersant in uniform dispersion state or for acceleration of the aggregate dispersion step with a base. The organic solvent used is not particularly limited. Specific examples of the organic solvent include lower alcohols such as methanol, ethanol, n-propanol, isopropanol, n-butanol, isobutanol, and tert-butanol; aliphatic ketones such as acetone, methyl ethyl ketone, methyl isobutyl ketone, and diacetone alcohol; ethylene glycol, diethylene glycol, triethylene glycol, glycerol, propylene glycol, ethylene glycol monomethyl or monoethyl ether, propylene glycol methyl ether, dipropylene glycol methyl ether, tripropylene glycol methyl ether, ethylene glycol phenyl ether, propylene glycol phenyl ether, diethylene glycol monomethyl or monoethyl ether, diethylene glycol monobutyl ether, triethylene glycol monomethyl or monoethyl ether, N-methylpyrrolidone, 2-pyrrolidone, N,N-dimethylformamide, dimethylimidazolidinone, dimethylsulfoxide, and N,N-dimethylacetamide. These solvents may be used singly or in a combination of two or more thereof. The amount of water in the water-insoluble colorant dispersion is preferably adjusted to 99 to 20 mass%, more preferably to 95 to 30 mass%. The content of the organic solvent in the pigment dispersion is preferably in the range of 50 to 0.1 % by mass, and more preferably from 30 to 0.05% by mass, of the aqueous dispersion.

In the production method according to the present invention, the solution of the water-insoluble colorant and/or the aqueous medium may contain at least one of additives such as crystal growth inhibitors, ultraviolet absorbents,

antioxidants, resin additives and surfactants, as needed.

Examples of the crystal-growth-preventing agent include phthalocyanine derivatives and quinacridone derivatives well known in this technical field. Specific examples thereof include phthalimidomethyl derivatives of phthalocyanine, sulfonic acid derivatives of phthalocyanine, N-(dialkylamino)methyl derivatives of phthalocyanine, N-(dialkylaminoalkyl) sulfonamide derivatives of phthalocyanine, phthalimidomethyl derivatives of quinacridone, sulfonic acid derivatives of quinacridone, N-(dialkylamino)methyl derivatives of quinacridone and N-(dialkylaminoalkyl)sulfonamide derivatives of quinacridone.

Examples of the ultraviolet absorbent include ultraviolet absorbents such as metal oxides, aminobenzoate-series ultraviolet absorbents, salicylate-series ultraviolet absorbents, benzophenone-series ultraviolet absorbents, benzotriazole-series ultraviolet absorbents, cinnamate-series ultraviolet absorbents, nickel chelate-series ultraviolet absorbents, hindered amine-series ultraviolet absorbents, urocanic acid-series ultraviolet absorbents and vitamin-series ultraviolet absorbents.

Examples of the antioxidant include hindered phenolic compounds, thioalkanic acid ester compounds, organic phosphorus compounds and aromatic amines.

Examples of the resin additives include synthetic resins such as anionically modified polyvinyl alcohol, cationically modified polyvinyl alcohol, polyurethane, carboxymethyl cellulose, polyester, polyallylamine, polyvinyl pyrrolidone, polyethylene imine, polyamine sulfone, polyvinylamine, hydroxyethyl cellulose, hydroxypropyl cellulose, melamine resins and modified products thereof.

All of these crystal-growth-preventing agents, ultraviolet absorbents and resin additives may be used either singly or in any combination thereof.

Specifically, the surfactant that can be used in the present invention may be properly selected from previously known surfactants and derivatives thereof, including anionic surfactants such as alkylbenzene sulfonic acid salts, alkylnaphthalene sulfonic acid salts, higher fatty acid salts, sulfonic acid salts of higher fatty acid esters, sulfuric acid ester salts of higher alcohol ether, sulfonic acid salts of higher alcohol ether, alkylcarboxylic acid salts of higher alkylsulfonamide, and alkylphosphoric acid salts; nonionic surfactants such as polyoxyethylene alkylethers, polyoxyethylene alkylphenylethers, polyoxyethylene fatty acid esters, sorbitan fatty acid esters, ethyleneoxide adducts of acetylene glycol, ethyleneoxide adducts of glycerol, and polyoxyethylene sorbitan fatty acid esters; and in addition to the above, amphoteric surfactants such as alkyl betaines and amido betaines; and silicone-based surfactants and fluorine-based surfactants.

In the production method according to the present invention, water-insoluble colorant fine particles are generated by mixing a solution obtained by codissolving the water-insoluble colorant and the specific polymer dispersant in an organic solvent in the presence of a phase-transfer base or an inorganic base with aqueous medium. The rate of the water used then is preferably 0.5 to 1,000 parts by mass, more preferably 1 to 100 parts by mass, with respect to 1 part by mass of the water-insoluble colorant solution, for improvement in the dispersion stability of fine particles and for further improvement in the color density of the dispersion.

In the production method according to the present invention, the temperature when the solution of the water-insoluble colorant pigment is mixed with the aqueous medium is preferably in the range of -50°C to 100°C, more preferably in the range of -20°C to 50°C. The temperature of the solution during mixing often influences the particle size of the resulting water-insoluble colorant fine particles significantly, and the liquid temperature is preferably adjusted in the range of -50°C to 100°C for controlled production of a dispersion containing nanometer-sized fine particles. In addition, a known freezing point-lowering agent such as ethylene glycol, propylene glycol or glycerol may be added then to the mixing water for assuring favorable liquid fluidity.

The water-insoluble colorant solution and the aqueous medium are preferably mixed as rapidly as possible, for production of uniformly sized nanometer-sized fine particles. Any apparatus used for agitation, mixing, dispersion and crystallization, such as ultrasonic wave oscillator, full-zone agitating blade, internal-circulation agitating apparatus, external-circulation agitating apparatus, flow-rate and ion-concentration controlling unit or the like, may be used. Alternatively, they may be mixed in continuously flowing water. Addition of the water-insoluble colorant solution into the aqueous medium may be done by any liquid injection method commonly used, but it is preferably added into water or downward onto water in the form of the liquid ejected from a nozzle such as of syringe, needle or tube. Multiple nozzles may be used for injection in a shorter period of time. Additives such as alkali and dispersant may be added to the aqueous medium to be mixed with the water-insoluble colorant solution, for reliable preparation of the aqueous dispersion of water-insoluble colorant fine particles.

Water-insoluble colorants such as pigments dissolved in an organic solvent are considered to show rapid crystal growth or give amorphous aggregate when mixed with an aqueous medium. However, in the present invention, because the water-insoluble colorant and the acid group-containing polymer compound are copresent as codissolved therein, the fine particles generated during or immediately after mixing of the solution with the aqueous medium are not impaired the dispersion stability. It is possible then to adjust the crystal form and the aggregation state of the fine particles in dispersion by heat treatment.

The aqueous water-insoluble colorant dispersion according to the present invention can be used, as it is or

after adjustment of its colorant concentration as needed, in various applications, for example as an inkjet ink. An aqueous dispersion is sometimes lower in colorant concentration for application as inkjet ink. Although it is possible to increase the concentration by condensation of the dispersion medium in the dispersion, the method is unpractical industrially. In contrast, the water-insoluble fine particles in the dispersion according to the present invention can be separated as a powder or paste, modified for improvement in redispersion efficiency in water, and then redispersed efficiently in an aqueous medium. It is thus possible to prepare an aqueous dispersion having a desired colorant concentration efficiently.

In the production method according to the present invention, it is preferable to form the aggregate of the water-insoluble colorant fine particles contained in the dispersion, by using aqueous water-insoluble colorant dispersion obtained in the aforementioned step. The "water-insoluble colorant fine particles" in the present invention include fine particles consisting only of a water-insoluble colorant and also fine particles containing a water-insoluble colorant and other components. For example, the fine particle may have a core particle of a water-insoluble colorant and/or other compounds and a sheath of the dispersant (polymer dispersant, surfactant, or the like) covering the same as it is adsorbed thereon. In particular in the dispersion according to the present invention, the specific polymer dispersant preferably covers the water-insoluble colorant fine particle as it is adsorbed thereon. The coated adsorption state can be confirmed, for example, by particle structure analysis by X-ray crystallographic analysis (XRD) or solid-state NMR analysis.

For example, processing by addition of an organic acid or an inorganic acid is used favorably for aggregation of the water-insoluble colorant fine particles. The acid treatment preferably includes a step of aggregating water-insoluble colorant fine particles with an acid, separating the aggregate from the solvent (dispersion medium), concentrating it, removing the solvent therefrom and demineralizing (deacidifying) the resulting aggregate. Acidification of the system leads to reduction of the electrostatic repulsive force in the acidic hydrophilic region, which in turn leads to aggregation of the water-insoluble colorant fine particles. Generally, acidification of a pigment dispersion into aggregation and subsequent alkali treatment of the aggregate may not lead to redispersion of the pigment fine particles, only showing increase in primary particle diameter. In contrast, in the production method for the dispersion according to the present invention, it is possible to reduce the increase in primary particle diameter significantly, when an aqueous dispersion of the water-insoluble colorant fine particles such as of pigment is first prepared and acidified to produce aggregate and then the aggregate is redispersed.

In the present invention, the water-insoluble colorant dispersion obtained may be heat-treated. It leads to improved crystallinity of the water-insoluble colorant and thus to improvement in the weather resistance of the image by using the ink obtained from the dispersion. The heat treatment, which may also lead to significant improvement in filtration efficiency, is thus a useful process. The temperature of the heat treatment is preferably 40 to 100°C, more preferably 40 to 80°C and most preferably 50 to 80°C. The heating time is preferably 10 minutes to 3 days, more preferably 1 hour to 1 day, and still more preferably 2 to 12 hours.

The acid used for aggregation of the water-insoluble colorant fine particles preferably converts the pigment-containing particles in the aqueous dispersion, which are fine particles resistant to precipitation, into aggregate in a form such as slurry, paste, powder-like, granular, cake-like (bulk), sheet-like, short fiber-like, or flake-like form that can be separated from the solvent efficiently by a common separation method. More preferably, for simultaneous separation of the alkali and the solvent used in the step of dissolving the water-insoluble colorant, an acid forming a water-soluble salt with the used alkali such as phase-transfer base is favorably used, and the acid itself is also preferably highly soluble in water. In order to conduct desalting as efficiently as possible, it is preferable that the amount of acid used is as small as possible so long as the aqueous dispersion of the pigment particles aggregate in the amount of the acid. Examples of the acid include hydrochloric acid, sulfuric acid, nitric acid, acetic acid, phosphoric acid, trifluoroacetic acid, dichloroacetic acid, and methane sulfonic acid. Of these acids, hydrochloric acid, acetic acid, and sulfuric acid are particularly preferable. An aqueous dispersion of water-insoluble colorant particles that has been processed with the acid so as to be easily separable can be easily separated by using a centrifugal separator, a filter, a slurry liquid-solid separator or the like. At this time, a degree of desalting or solvent removal can be controlled by adding diluent water, or by increasing frequency of decantation and washing.

The step of obtaining the water-insoluble colorant aggregate, in which addition of an organic solvent is effective in improving filtration, is a useful process. Any kind of solvent, either an aprotic or protic organic solvent, may be used favorably as the solvent, and a typical example thereof is a polar solvent such as ethyl acetate, ethyl lactate, acetone, methyl ethyl ketone, acetonitrile, methanol, ethanol or isopropanol.

The amount thereof used is also not particularly limited, but preferably in the range of 1 to 100 parts by mass, more preferably in the range of 5 to 50 parts by mass, with respect to 100 parts by mass of the water-insoluble colorant dispersion.

The aggregate thus obtained may be used as a high-water-content paste or slurry or alternatively, as a fine powder after drying as needed for example by spray drying, centrifugation drying, filtration drying or freeze drying.

In a favorable embodiment of the production method according to the present invention, it is preferable to make the fine particles redispersible by adding an aqueous medium to the aggregate prepared from the aqueous dispersion and to treat the dispersion with an alkali then. Specifically, in the step including alkali treatment, it is possible for example

to treat the water-insoluble colorant fine particles aggregated with an acid, by using an alkali in the step of forming aggregate, making the aggregate adsorbed on the fine particles and thus neutralizing the copresent acid group-containing polymer compound, making it function as a dispersant and redispersing the water-insoluble colorant in the aqueous medium effectively.

In the preferable embodiment of the production method according to the present invention, because demineralization and solvent removal is complete in the step of forming aggregate, it is possible to obtain a conc-base containing smaller amounts of impurities for preparation of an aqueous dispersion of water-insoluble colorant fine particles for example of a pigment. The alkali used in the redispersion step may be any alkali, if it serves as a neutralizing agent to the dispersant having an acidic hydrophilic region and makes the dispersant more soluble in water. The "alkali", as used herein, is identical with the "base" described above. Typical examples of the alkalis include alkali metal hydroxides such as sodium hydroxide, lithium hydroxide, and potassium hydroxide; ammonia and various organic amines such as aminomethylpropanol, dimethylaminopropanol, dimethylethanolamine, diethyltriamine, monoethanolamine, diethanolamine, triethanolamine, butyldiethanolamine and morpholine, and the phase-transfer bases described above. More specific examples thereof include ammonium compounds represented by Formula (I) or (II); and more preferable are choline hydroxide, tetramethylammonium hydroxide, tetraethylammonium hydroxide and the like. These alkalis may be used alone or in combination of two or more.

The amount of the alkali used is not particularly limited within the range in which the aggregated particles can be re-dispersed stably in water. However, when the dispersion is used for end use such as a printing ink or inkjet printer ink, the alkali sometimes causes corrosion of various kinds of parts. Therefore, it is preferred to use the alkali in such an amount that pH is within the range of 6 to 12, and more preferably from 7 to 11.

Agitating, mixing and dispersing apparatuses may be used as needed in the step of redispersing the aggregated water-insoluble colorant particles in an aqueous medium. When a paste or slurry of water-insoluble colorants which is high in water content is used, addition of water is unnecessary. Further, heating, cooling, distillation or the like may be conducted for the purpose of enhancing efficiency of re-dispersion and another purpose of removing unnecessary water-soluble organic solvent, or an excessive alkali or the like.

The recording liquid of the present invention may be prepared by using the above dispersion of the present invention, and mixing the dispersion with each of prescribed components such as a polymer compound, a surfactant and an aqueous solvent, and then uniformly dissolving or dispersing them. It is preferable that the recording liquid of the present invention contains the above water-insoluble colorant in an amount of 0.1 % by mass to 15% by mass of the recording liquid. When an excessive amount of polymer compounds or other additives are contained in the prepared ink, these materials may be properly removed according to a method such as centrifugal separation and dialysis, thereby to re-prepare the ink composition. The recording liquid of the present invention may be used alone. Alternatively, the recording liquid may be combined with another ink to prepare an ink set of the present invention.

The recording liquid of the present invention may be used in various image-forming methods and apparatuses, such as a variety of printing methods, inkjet process, and electrophotography. Imaging can be performed according to an image-forming method using the apparatuses. Further, according to the inkjet process, fine patterns may be formed, or dosage of drugs may be conducted.

It is preferable that the recording liquid of the present invention is used as an inkjet recording liquid. It is also preferred to prepare an ink set using the inkjet recording liquid. It is also preferred to prepare a printed article having an image recorded by use of the recording liquid of the present invention and tools that can provide the recording liquid with a recording medium. It is more preferred to prepare a printed article having an image with a shading nuance adjusted by the means that has a function to adjust an applying amount or concentration of the recording liquid. It is also preferable that the recording liquid or ink set is used in an image-forming method that includes a process of recording an image by providing the recording liquid with a medium. Further, according to the present invention, it is also possible to produce an image-forming apparatus having the means for recording an image by using the above recording liquid or ink set and providing the recording liquid with a medium.

When the dispersion of the present invention, which has such excellent properties as described above, is applied to an ink, it is possible to achieve the image-recording with a high density and detail equivalent to the current off-set printing, or letter press printing that reproduce a color tone shading nuance by an area proportion (area gradation) as an example.

[Average particle diameter from observation by transmission electron microscope]

In the present invention, a form of the water-insoluble colorant particles formed by mixing the solution of the water-insoluble colorant with an aqueous medium, that are contained in the dispersion, is observed by using a transmission electron microscope (TEM). An average particle diameter thereof is calculated as described below. The dispersion (dispersion liquid) containing fine particles of water-insoluble colorant is diluted. The diluted dispersion is dropped onto a Cu 200 mesh to which a carbon film is attached, and then the fine particles are dried on the mesh. The diameter

of each of 300 particles is measured from images of the particles photographed to 100000 times using TEM (1200EX, trade name, manufactured by JEOL Ltd.), and then an average particle diameter is calculated. At this time, because the dispersion is dried on the Cu 200 mesh as described above, even the water-insoluble colorant is in a state well dispersed in the dispersion, there is a case where particles of the water-insoluble colorant apparently aggregate during the dry step, which makes it difficult to discriminate an accurate particle size. In this case, an average particle diameter is calculated by using isolated 300 particles that are not piled on other particles. When the particles of the water-insoluble colorant are not spherical, the width of the particle cross section (the longest size of the particle) is measured.

The average particle diameter of the water-insoluble colorant is from 10 nm, to 45 nm, as measured using a transmission electron microscope (TEM). The average particle diameter is from 15 nm to 40 nm from a viewpoint of transparency of the dispersion and compatibility of dispersion stability and resistance to light in the dispersion. When the average particle size is too small, it is sometimes difficult to keep a stable dispersion state in the dispersion for a long time, or it is sometimes difficult to obtain excellent resistance to light. On the other hand, when the average particle size is too large, it is sometimes difficult to obtain good transparency of the dispersion. In the present invention, the water-insoluble colorant that contains two or more kinds of pigments may consist of pigments, or may contain additional compounds other than the pigments. At this time, it is preferable that the particles of the water-insoluble colorant are composed of a solid solution of two or more kinds of pigments. However, a mixture of a portion having a crystalline structure and another portion having a non-crystalline structure may be present in the particle. Further, the particle may be composed of a core to which the above dispersing agent (a polymer dispersant, a surfactant or the like) is adhered so as to cover the core therewith, a component of the core being pigments or a mixture of the pigments and another compound.

The water-insoluble colorant that is used in the present invention may be contained in resin fine particles or inorganic fine particles. At this time, it is preferable that the resin fine particles and inorganic fine particles are a non-colored component in order not to degrade a tint of the water-insoluble colorant. An average particle size of the resin fine particles or the inorganic fine particles is preferably from 6 nm to 200 nm. When the dispersion of the water-insoluble colorant is used as an inkjet recording liquid, the average particle size is more preferably from 6 nm to 150 nm, and especially preferably from 6 nm to 100 nm, from a viewpoint of obtaining excellent discharge (emission) stability.

[Average particle diameter according to a dynamic light-scattering method]

In the present invention, a dispersion state of the water-insoluble colorant may be also evaluated according to a dynamic light-scattering method. Thereby, an average particle diameter of the water-insoluble colorant can be calculated. The principle of evaluation is detailed below. Particles with the size ranging from about 1 nm to about 5 μm are momentarily changing their position and direction in Brownian motion such as translation and rotation. Accordingly, by irradiating a laser light to these particles and then detecting the resultant scattered light, fluctuation of the scattered light intensity depending on Brownian motion is observed. By observing the fluctuation of the scattered light intensity with respect to time, a speed (diffusion coefficient) of the particles in Brownian motion is calculated and the size of the particles can be known.

Applying the above principle, an average particle diameter (hereinafter, volume average particle diameter will be referred to as "average particle diameter") of the water-insoluble colorant is measured. When the measured value is similar to the average particle diameter that is obtained from the TEM observation, it means that the particles in a liquid are in mono dispersion (the situation in which particles are neither bonding nor aggregating to each other). Fluctuation in the value means some of the primary particles of the water-insoluble colorant are present in the secondary particle state (aggregation state).

Thus, the combination of TEM observation of the primary particle diameter and measurement of secondary particles by dynamic light-scattering method allows estimation of the dispersion state of the water-insoluble colorant.

It was found in the present invention, that the arithmetic average particle diameter of the water-insoluble colorant in dispersion medium, as determined by dynamic light-scattering method, was similar to or not so separated from the average diameter obtained by TEM observation. In other words, it has been confirmed that a mono dispersion of the water-insoluble colorant in a dispersion medium according to the present invention can be attained. The arithmetic average particle size of the water-insoluble colorant in the dispersion medium according to the dynamic light-scattering method is preferably 60 or less, and more preferably 50 nm or less, and especially preferably 45 nm or less. The lowest limit value of the arithmetic average particle size is not particularly restricted, but it is normally 20 nm or more. Thus, a preferable range of the arithmetic average particle size is not substantially different from that obtained from TEM observation. In the present invention, unless indicated otherwise, the simply described "average particle diameter" means the average diameter determined by TEM.

It should be noted that even though the water-insoluble colorant in a dispersion medium is completely in a monodispersion, error of measurement or the like sometimes causes a difference between the average particle size according to the dynamic light-scattering method and the average particle size from TEM observation. For example, it

is necessary that a concentration of a liquid to be measured is suitable for both the performance of the measurement apparatus and the method of detecting scattered light. Accordingly, error occurs unless a liquid to be measured has a concentration enough to secure a sufficient amount of transmission of light. Further, when nano-sized particles are measured, the obtained signal intensities are so feeble that they are strongly affected by dust, which causes errors. Therefore, it is necessary to take care of pre-treatment of the sample and purity of environment for measurement. When nano-sized particles are measured, a laser light source having a transmission output of 100 mW or more is suitable for enhancing intensities of scattered light.

Further, it is preferable that a particle size distribution of the water-insoluble colorant in a dispersion medium according to the present invention is monodispersion. Monodisperse particles are advantageous because adverse influence owing to light-scatting at large-sized particles can be reduced. In addition, when aggregate is formed by using the dispersion at printing, recording, or the like, the mono dispersion has advantages to control of a filling form of the formed aggregate or the like. As an indicator that is used to evaluate dispersity of the dispersion, for example, there can be used a difference between the diameter (D90) of particles that occupy 90% by number and the diameter (D10) of particles that occupy 10% by number of the total particle numbers, in the following integral equation of the particle diameter distribution function with respect to the arithmetic average particle diameter that is obtained according to the dynamic light-scattering method:

$$dG = f(D) \times d(D)$$

where, G represents the number of particles; and D represents a primary particle size.

In the present invention, the above difference between the size (D90) and the size (D10) is preferably 45 nm or less, and more preferably from 1 nm to 30 nm, and especially preferably from 1 nm to 20 nm. It should be noted that the above method can be suitably used in the particle diameter distribution curve that is prepared by using the particle diameter that is obtained from observation by using a transmission electron microscope.

Further, as another indicator that is used to evaluate dispersity, there can be also used a ratio (Mv/Mn) of a volume average particle size (Mv) to a number average particle size (Mn). Both Mv and Mn are obtained by the dynamic light-scattering method. In the aqueous dispersion of the present invention, the aforementioned ratio (Mv/Mn) of the water-insoluble colorant is preferably 1.5 or less, and more preferably 1.4 or less, and still more preferably 1.3 or less.

The dispersion of the present invention achieves an excellent effect of maintaining a stable dispersed state of the fine particles for a long term by suppressing an aggregation, despite containing fine particles of an extremely minute water-insoluble colorant. Further, the dispersion of the present invention exhibits the high dispersed stability even when they are made to a re-dispersion liquid of high concentration. An ink composition, which uses the dispersion of the present invention, has high storage stability capable of long term storage. The ink composition provides a recording liquid which has a high discharging property and a high transparency. Furthermore, the production method of the present invention enables to obtain the superior dispersion efficiently and with an excellent purity. In addition, the recording liquid, the image-forming method and the image-forming apparatus of the present invention enable to form images of favorable and highly accurate.

## EXAMPLES

The present invention will be described in more detail based on the following examples, but the invention is not intended to be limited thereto. In the following examples, the terms "parts(s)" and "%" are values by mass, unless otherwise specified. The average particle diameter of each dispersion was determined by dynamic scattering method by using LB-500 dynamic light-scattering analyzer (trade name, manufactured by HORIBA Ltd.), after the dispersion was diluted with ion-exchanged water. At this time, in addition to a volume-average particle size Mv of each of the dispersions, a number-average particle size Mn thereof is measured. Further, evaluation of the average particle size from observation of the transmission electron microscope (TEM) was conducted by dropping a diluted dispersion onto a Cu 200 mesh to which a carbon film is attached, and then dried, and thereafter measuring the size (width of particle cross section) of each of 300 particles that are isolated and not piled, from images of the particles photographed to 100,000 times using TEM (1200EX, trade name, manufactured by JEOL Ltd.), thereby calculating an average value as an average particle size. Hereinafter, the average particle size calculated from TEM observation is described as a TEM average particle diameter.

(Example 1)

13.2 parts by mass of C. I. Pigment Red 122, 6.6 parts by mass of Specific polymer dispersant (D-1) (acid

value: 200 mg-KOH/g, Mw=18,000), 160 parts by mass of dimethylsulfoxide, and 39 parts by mass of tetramethylammonium hydroxide (TMAH; cosolubilization base, 25% methanol solution, manufactured by Alfa Aesar) were mixed; and the mixture was heated to 60°C and agitated for 2 hours, to give a dark blue purple pigment solution containing the pigment and the styrene/methacrylic acid copolymer. In addition, in each of the following Examples and Comparative examples, TMAH was used as a cosolubilization base.

After subjecting the resultant pigment solution to an ultrasonic treatment, the solution was rapidly injected into 2,000 mass parts of an ion-exchange water (water temperature: 12 °C by an ice bath) being stirred by a stirrer, using a liquid feeding pump in the condition of 100 ml/minute, and as a result, a reddish pigment dispersion liquid (re-precipitation liquid) 1 was obtained. The volume average particle diameter of the pigment fine particles in the pigment dispersion liquid which was measured in accordance with the dynamic light scattering method was 37.4 nm (TEM average particle diameter: 25.3 nm) and it was ensured that a minute high concentration dispersion liquid was obtained regulating a progress in the state of aggregation. A change of the particle diameter after storage for 2 weeks was not observed. Further, no precipitate was found. Further, the dispersion liquid was in the state of loose aggregation formed in a manner of kinetic theory, and the volume average particle diameter could be made small to fine down to 31.2 nm by an ultrasonic homogenizer or a time lapse for one month.

Subsequently, entering the pigment dispersion liquid 1 into a 3L flask, it was heated at 50 °C, and stirred for 3 hours. Then, after cooling the liquid 1 down to a room temperature, pH value was adjusted to around 3 by dripping 11 ml of hydrochloric acid, and pigment particles were aggregated from the pigment dispersion liquid. Thereafter, adding 200 ml of ethyl acetate, the resultant solution was stirred for 2 hours, followed by being filtrated under reduced pressure by using a membrane filter (average pore diameter: 0.2 μm), and then washed twice with ion-exchanged water. Further, the resultant mixture was vacuum-dried (at 45 °C) for 1 day to obtain an aggregation powder of desalted and solventless PR-122 (quinacridone organic pigment)/dispersant (D-1).

Then, adding 0.5 mass parts of tetramethylammonium hydroxide (15 mass % aqueous solution) [base for re-dispersion] to 1 mass part of the powder, and after also adding ion-exchange water [aqueous medium for re-dispersion] to adjust 10 % pigment content, the resultant mixture was subjected to re-dispersion treatment by ultrasonic treatment to obtain pigment dispersion liquid (re-dispersion liquid) A. A number average particle diameter of the pigment fine particles among the pigment dispersion liquid A measured in accordance with dynamic light scattering method was 27.6 nm (TEM average particle diameter: 25.4 nm) and it was verified that regardless of high concentration, a dispersion liquid containing minute pigment fine particles was obtained. A change of the particle diameter after storage for 2 weeks was not observed. Further, no precipitate was found.

(Example 2)

Pigment dispersion liquid B having a pigment content of 10 % was obtained by preparing the pigment dispersion liquid (re-precipitation liquid) 2 in the same manner as in Example 1, except that the pigments were changed to C. I. pigment red 254 and that the used mass parts of the pigment was equalized with the same mole amount as the C. I. pigment red 122 in Example 1 respectively. A number-average particle diameter of the pigment fine particles among the pigment dispersion liquid B measured in accordance with the dynamic light-scattering method was 36.6 nm (TEM average particle diameter: 29.2 nm) and it was verified that a minute dispersion liquid of high concentration became obtainable suppressing a progress in the state of aggregation. A change of the particle diameter after storage for 2 weeks was not observed. Further, no precipitate was found.

(Example 3)

Pigment dispersion liquid C having a pigment content of 10 % was obtained by preparing the pigment dispersion liquid (re-precipitation liquid) 3 in the same manner as in Example 1, except that the pigments were changed to C. I. pigment yellow 74 and that the used mass parts of the pigment was equalized with the same mole amount as the C. I. pigment red 122 in Example 1 respectively. A number-average particle diameter of the pigment fine particles among the pigment dispersion liquid C measured in accordance with the dynamic light-scattering method was 38.5 nm (TEM average particle diameter: 24.5 nm). A change of the particle diameter after storage for 2 weeks was not observed. Further, no precipitate was found.

(Examples 4 to 20)

Examples 4 to 20 were carried out in the same manner as Example 1 except that the pigment dispersion liquid and/or the chemical agent to be added being used in Examples 1 to 3 were changed as shown in Table 1 below, and the pigment dispersion liquids D to T were obtained. Number average particle diameters and TEM average particle diameters in accordance with dynamic light scattering method about re-precipitation liquids of the pigment dispersion

liquid samples A to T, and number average particle diameters in accordance with dynamic light scattering method about redispersion liquids of the pigment dispersion liquid samples A to T are shown in Table 1.

(Comparative example 1)

13.2 parts by mass of C. I. Pigment Red 122, 6.6 parts by mass of the following polyvinylpyrrolidone (hereinafter, referred to as "PVP"; manufactured by Wako Pure Chemical Industries, Mw=25,000), 160 parts by mass of dimethylsulfoxide, and 39 parts by mass of tetramethylammonium hydroxide (cosolubilization base, 25% methanol solution, manufactured by Alfa Aesar) were mixed; and the mixture was heated to 60°C and agitated for 2 hours, to give a dark blue purple pigment solution containing the pigment and the styrene/methacrylic acid copolymer.

After subjecting the resultant pigment solution to an ultrasonic treatment, the solution was rapidly injected into 2,000 mass parts of an ion-exchange water (water temperature: 12 °C by an ice bath) being stirred by a stirrer, using a liquid feeding pump in the condition of 100 ml/minute, and as a result, a reddish pigment dispersion liquid (re-precipitation liquid) 1c was obtained. The volume average particle diameter of the pigment fine particles in the pigment dispersion liquid which was measured in accordance with the dynamic light scattering method was 189.4 nm (TEM average particle diameter: 29.5 nm). Although minute primary particles were formed, the secondary particles were relatively large and it was verified that the dispersion with comparatively advanced progress in the state of aggregation appeared. In addition, aggregation progressed furiously with the lapse of time and after 3 days, a large amount of precipitate was observed.

Subsequently, entering the pigment dispersion liquid 1c into a 3L flask, it was heated at 50 °C, and stirred for 3 hours. Then, after cooling the liquid 1c down to a room temperature, pH value was adjusted to around 3 by dripping 11 ml of hydrochloric acid, and pigment particles were aggregated from the pigment dispersion liquid. Thereafter, adding 200 ml of ethyl acetate, the resultant solution was stirred for 2 hours, followed by being filtrated under reduced pressure by using a membrane filter (average pore diameter: 0.2 μm), and then washed twice with ion-exchanged water. Further, the resultant mixture was vacuum-dried (at 45 °C) for 1 day to obtain an aggregation powder of desalted and solventless PR-122 (quinacridone organic pigment)/PVP.

Then, adding 0.5 mass parts of the following W-19 [surfactant for redispersion] to 1 mass part of the powder, and after also adding ion-exchange water [aqueous medium for re-dispersion] to adjust 10 % pigment content, the resultant mixture was subjected to re-dispersion treatment by ultrasonic treatment to obtain pigment dispersion liquid (re-dispersion liquid) U. A number average particle diameter of the pigment fine particles among the pigment dispersion liquid U measured in accordance with dynamic light scattering method was 56.6 nm (TEM average particle diameter: 29.4 nm) and it was verified that a dispersion liquid with a slightly advanced progress in the state of aggregation was obtained. In addition, the particle diameter after storage for 2 weeks remarkably enlarged, and aggregation progressed up to 108.2 nm.

* W-19: Compound having the following structure

W-19

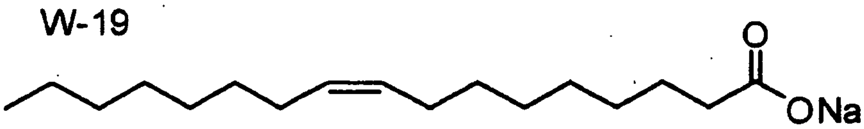

(Comparative example 2)

13.2 parts by mass of C. I. Pigment Red 122, 6.6 parts by mass of styrene/methacrylic acid copolymer (Dispersant A; acid value: 180 mg-KOH/g, Mw=18,000), 160 parts by mass of dimethylsulfoxide, and 39 parts by mass of tetramethylammonium hydroxide (cosolubilization base, 25% methanol solution, manufactured by Alfa Aesar) were mixed; and the mixture was heated to 60°C and agitated for 2 hours, to give a dark blue purple pigment solution containing the pigment and the styrene/methacrylic acid copolymer.

After subjecting the resultant pigment solution to an ultrasonic treatment, the solution was rapidly injected into 2,000 mass parts of an ion-exchange water (water temperature: 12 °C by an ice bath) being stirred by a stirrer, using a liquid feeding pump in the condition of 100 ml/minute, and as a result, a reddish pigment dispersion liquid (re-precipitation liquid) 2c was obtained. The volume average particle diameter of the pigment fine particles in the pigment dispersion liquid which was measured in accordance with the dynamic light scattering method was 145.4 nm (TEM average particle diameter: 28.5 nm). Although minute primary particles were formed, the secondary particles were relatively large and it was verified that the dispersion with comparatively advanced progress in the state of aggregation appeared.

Subsequently, entering the pigment dispersion liquid 2c into a 3L flask, it was heated at 50 °C, and stirred for 3 hours. Then, after cooling the liquid 2c down to a room temperature, pH value was adjusted to around 3 by dripping

11 ml of hydrochloric acid, and pigment particles were aggregated from the pigment dispersion liquid. Thereafter, adding 200 ml of ethyl acetate, the resultant solution was stirred for 2 hours, followed by being filtrated under reduced pressure by using a membrane filter (average pore diameter: 0.2 μm), and then washed twice with ion-exchanged water. Further, the resultant mixture was vacuum-dried (at 45 °C) for 1 day to obtain an aggregation powder of desalted and solventless PR-122 (quinacridone organic pigment) and styrene/methacrylic acid copolymer.

Then, adding 0.5 mass parts of tetramethylammonium hydroxide (15 mass % aqueous solution) [base for re-dispersion] to 1 mass part of the powder, and after also adding ion-exchange water [aqueous medium for re-dispersion] to adjust 10 % pigment content, the resultant mixture was subjected to re-dispersion treatment by ultrasonic treatment to obtain pigment dispersion liquid (re-dispersion liquid) V. A number average particle diameter of the pigment fine particles among the pigment dispersion liquid V measured in accordance with dynamic light scattering method was 47.6 nm (TEM average particle diameter: 27.1 nm) and it was verified that a dispersion liquid with a slightly advanced progress in the state of aggregation was obtained. In addition, the particle diameter after storage for 2 weeks remarkably enlarged, and aggregation progressed up to 79.1 nm.

(Comparative Examples 3 and 4)

Comparative Examples 3 and 4 were carried out in the same manner as Example 1 except that pigment dispersion liquid and/or the chemical agent to be added being used in Comparative Examples 1 and 2 were changed as shown in Table 1 below, to obtain each pigment dispersion liquids W and X.

(Example 21 and Comparative example 5)

(Preparation of Ink Composition)

50 parts by mass of each of the pigment dispersion liquids A to T (Examples) was mixed with 7.5 parts by mass of diethylene glycol, 5 parts by mass of glycerol, 5 parts by mass trimethylolpropane, 0.2 parts by mass of Acetyrenol EH (trade name, manufactured by Kawaken Fine Chemical Co., Ltd.), and 32.3 parts by mass of ion-exchanged water to each obtain ink compositions [1] to [20].

50 parts by mass of each of the pigment dispersion liquids U to X (Comparative Examples) within 1 day after the preparation was mixed with 7.5 parts by mass of diethylene glycol, 5 parts by mass of glycerol, 5 parts by mass trimethylolpropane, 0.2 parts by mass of Acetyrenol EH, and 32.3 parts by mass of ion-exchanged water each other and subjecting the resultant mixture to an ultrasonic treatment to obtain each ink compositions [c1] to [c4].

[Evaluation of Storage Stability]

Regarding with the resultant ink compositions [1] to [20] and [c1] to [c4], dynamic light scattering average particle diameters on the day of preparation were measured in advance. Then, the ink compositions were subjected to a forcible accelerated time lapse of 1 week under 60 °C, followed by measuring average particle diameter again in accordance with dynamic light scattering. Particle diameter fluctuation ratio (([Particle diameter of Primary period] - [Particle diameter after Time Lapse under Heating]) / [Particle diameter of Primary period]) in this occasion are shown in Table 1. When the particle diameter fluctuation ratio is small, the ink composition can be evaluated as having high storage stability.

[Table 1]

| | | | | (Re-precipitation liquid) | | (Re-dispersion liquid) | Ink liquid/Evaluation of storage stability | | |
|---|---|---|---|---|---|---|---|---|---|
| | Water-insoluble colorant | Dispersant | Base for redispersion | TEM average particle diameter (nm) | Dynamic light scattering average particle diameter (nm) | Dynamic light scattering average particle diameter (nm) | Particle diameter (nm) of primary period | Particle diameter (nm) after time lapse under heating | Particle diameter fluctuation ratio (%) |
| Example 1 | PR-122 | D-1 | TMAH | 25.3 | 37.4 | 27.6 | 28.6 | 29.1 | 1.7 |
| Example 2 | PR-254 | D-1 | TMAH | 29.2 | 42.6 | 36.6 | 32.5 | 34.5 | 6.2 |
| Example 3 | PY-74 | D-1 | TMAH | 24.5 | 36.8 | 38.5 | 34.2 | 35.6 | 4.1 |
| Example 4 | PR-122 | D-3 | TMAH | 24.6 | 39.6 | 38.4 | 34.6 | 36.1 | 4.3 |
| Example 5 | PR-122 | D-5 | TMAH | 29.6 | 31.8 | 36.9 | 35.6 | 38.6 | 8.4 |
| Example 6 | PR-122 | D-8 | TMAH | 27.1 | 35.6 | 34.8 | 31.2 | 34.2 | 9.6 |
| Example 7 | PR-122 | D-11 | TMAH | 26.3 | 39.6 | 29.6 | 30.1 | 31.2 | 3.7 |
| Example 8 | PR-122 | D-12 | TMAH | 24.9 | 37.9 | 37.5 | 36.8 | 39.9 | 8.4 |
| Example 9 | PR-122 | D-16 | TMAH | 23.8 | 35.4 | 34.7 | 36.6 | 39.1 | 6.8 |
| Example 10 | PR-122 | D-19 | TMAH | 25.3 | 35.6 | 33.6 | 32.6 | 35.4 | 8.6 |
| Example 11 | PR-122 | D-15 | TMAH | 26.3 | 39.6 | 39.1 | 38.6 | 42.1 | 9.1 |
| Example 12 | PR-122 | D-21 | TMAH | 24.1 | 34.5 | 33.6 | 39.4 | 42.6 | 8.1 |
| Example 13 | PR-122 | D-18 | TMAH | 29.3 | 34.5 | 36.7 | 37.4 | 40.9 | 9.4 |
| Example 14 | PR-122 | D-22 | TMAH | 23.1 | 31.2 | 33.6 | 27.6 | 29.9 | 8.3 |
| Example 15 | PR-122 | D-23 | TMAH | 24.5 | 26.9 | 26.4 | 28.6 | 29.9 | 4.5 |
| Example 16 | PR-122 | D-30 | TMAH | 23.6 | 24.1 | 25.6 | 27.8 | 27.9 | 0.4 |
| Example 17 | PR-122 | D-32 | TMAH | 22.3 | 25.6 | 26.3 | 29.9 | 30.5 | 2.0 |
| Example 18 | PR-122 | D-1 | NaOH | 25.3 | 37.4 | 31.2 | 32.1 | 33.1 | 3.1 |
| Example 19 | PR-122 | D-8 | KOH | 27.1 | 35.6 | 35.4 | 34.2 | 35.6 | 4.1 |

(continued)

| | | | | (Re-precipitation liquid) | | (Re-dispersion liquid) | Ink liquid/Evaluation of storage stability | | |
|---|---|---|---|---|---|---|---|---|---|
| | Water-insoluble colorant | Dispersant | Base for redispersion | TEM average particle diameter (nm) | Dynamic light scattering average particle diameter (nm) | Dynamic light scattering average particle diameter (nm) | Particle diameter (nm) of primary period | Particle diameter (nm) after time lapse under heating | Particle diameter fluctuation ratio (%) |
| Example 20 | PR-254 | D-8 | KOH | 28.8 | 30.2 | 38.4 | 36.9 | 39.4 | 6.8 |
| Comparative example 1 | PR-122 | PVP | TMAH | 29.5 | 189.4 | 56.6 | 61.2 | 163.2 | 166.7 |
| Comparative example 2 | PR-122 | Dispersant A | TMAH | 28.5 | 145.4 | 31.2 | 31.5 | 36.9 | 17.1 |
| Comparaiive example 3 | PR-254 | Dispersant A | TMAH | 30.1 | 86.6 | 42.6 | 45.3 | 56.3 | 24.3 |
| Comparative example 4 | PY-74 | Dispersant A | TMAH | 26.9 | 45.6 | 39.6 | 38.1 | 150.6 | 295.3 |

The abbreviations in the Tables respectively mean the followings.
TMAH: tetramethylammonium hydroxide (ClogP: -4.586)
Dispersant A: styrene/methacrylic acid copolymer (acid value: 180 mg-KOH/g, Mw=18,000)

As those results in Table 1 show, the ink compositions using dispersant without having the cationic group (Comparative Examples 1 to 4) are found to be of low dispersion stability, easily causing secondary aggregation in ink, and inferior in the storage stability.

On the contrary, the pigments fine particle dispersion of the present invention (Examples 1 to 20) containing the specific polymer dispersant having specific cationic group and acid group and the phase transfer base or the inorganic base are found to provide the dispersion liquids whose pigment fine particles are made small to fine in both the re-precipitation liquid and the re-dispersion liquid. Further, according to the present invention, it is found that a storage stability as the ink is extremely high, and that almost no secondary aggregation is caused.

Especially, a comparison between Example 1 (polymer dispersant D-1) and Example 5 (polymer dispersant D-5) verifies that when the ligand of quaternary ammonium group composing a cationic group is hydrophobic, the dispersion stability including the storage stability in ink elevates still more. Because a hydrophobic solvent is added when the ink composition is made to prepare the ink, it is conceivable that having a hydrophobic property part contributes to enhancing the dispersion stability in the whole ink liquid.

Further, a comparison between the polymer dispersants D-23 (Example 15) and D-30 (Example 16) verifies that an ink stabilization effect by hydrophobing is found not only when a cation structure was changed but also when an anion structure was changed, and even a salt exchange to more hydrophobic anion enables to achieve high stability.

[Evaluation of Discharging Property]

Each of the ink compositions shown in Table 2 below was charged into a cartridge of an inkjet printer PX-G930 (trade name, manufactured by Seiko-Epson). Using the inkjet printer, a solid image (reflection density: 1.0) was printed at the whole surface of an inkjet paper (a photographic base paper "KOTAKU (Gloss)" trade name, manufactured by Seiko-Epson) to count numbers of "white streaks" generated during print. Evaluation of discharging property was performed according to the criterion as set below:

3: There is no generation of white streaks (non-printed area) all over the printing surface.
2: Generation of white streaks is slightly observed, which is no problem in practice.
1: Generation of white streaks is frequently observed all over the printing surface, which is not an allowable quality in practice.

The results of evaluation are shown in Table 2.

[Table 2]

| Ink | composition | Discharging property |
|---|---|---|
| [1] | (Example 1) | 3 |
| [2] | (Example 2) | 3 |
| [5] | (Example 5) | 3 |
| [10] | (Example 10) | 3 |
| [12] | (Example 12) | 3 |
| [c1] | (Comparative example 1) | 1 |
| [c2] | (Comparative example 2) | 2 |
| [c4] | (Comparative example 4) | 1 |

As is apparent from Table 2, the ink compositions prepared using the pigment dispersion liquids of Examples are verified to be superior in the discharging property.

[Evaluation of Transparency]

Further, each of ink compositions shown in Table 3 below was coated with a bar coater on a 60 μm thick polyethylene terephthalate (PET) sheet, and was followed by drying to produce a printed article. Thereafter, the transparency of the printed area was evaluated visibly according to the criterion described below.
2: excellent

1: poor

[Evaluation of pigment particle diameter]

The TEM average particle diameter was calculated by the method described above.
The results of each of the evaluations are shown in Table 3.

[Table 3]

| Sample | | TEM Average Diameter [nm] | Transparency |
|---|---|---|---|
| [1] | (Example 1) | 25.3 | 2 |
| [2] | (Example 2) | 29.2 | 2 |
| [5] | (Example 5) | 29.6 | 2 |
| [10] | (Example 10) | 25.3 | 2 |
| [12] | (Example 12) | 24.1 | 2 |
| [c1] | (Comparative Example 1) | 29.5 | 1 |
| [c2] | (Comparative Example 2) | 28.5 | 1 |
| [c4] | (Comparative Example 4) | 26.9 | 1 |

As is obvious from Table 3, the printed articles prepared by using each of the ink compositions according to the present invention were superior in transparency even when printed at higher density and thus, the ink compositions are useful.
From the above mentioned results, it was verified that the dispersion using the polymer dispersant having the specific cationic group and the acid group of the present invention can be maintained as being minute without carelessly allowing the pigment fine particles contained in the dispersion to aggregate secondarily. Accordingly, because the composition has high discharging stability in an occasion of being changed into ink, and because the ink has high transparency even in high concentration domain, the ink composition with high color reproduction property can be obtained.

## Claims

1. A dispersion comprising fine particles of a water-insoluble colorant having an average particle diameter of 10-45 nm, as measured using a transmission electron microscope, a polymer dispersant having a cationic group and an acid group, an aqueous medium, and at least one of a phase transfer base and an inorganic base, the dispersion being obtainable by dissolving the water-insoluble colorant, polymer dispersant and phase transfer base/inorganic base together in an organic solvent and generating fine particles of the water-insoluble colorant by mixing the solution with an aqueous medium;
wherein:

the water-insoluble colorant is an organic pigment selected from quinacridone organic pigments, diketopyrrolopyrrole organic pigments and mono-azo yellow organic pigments;
the phase transfer base is represented by one of the following Formulae (I) and (II):

Formula (I)

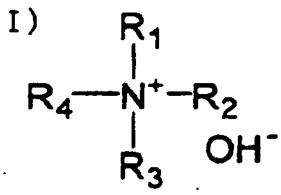

Formula (II) $R_{5(4-k)}$-$N^+$-$(CH_2CH_2OH)_k$ $OH^-$

wherein $R_1$ to $R_5$ each independently represents an alkyl, aryl or alkylaryl group having 1 to 10 carbon atoms; and k represents an integer of 1 to 4; and
the polymer dispersant contains a repeating unit represented by one of the following Formulae (1) and (2):

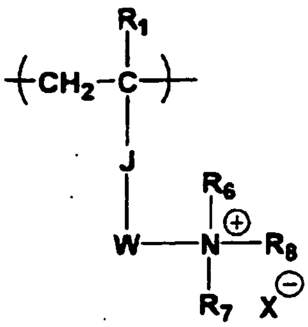

Formula (1)

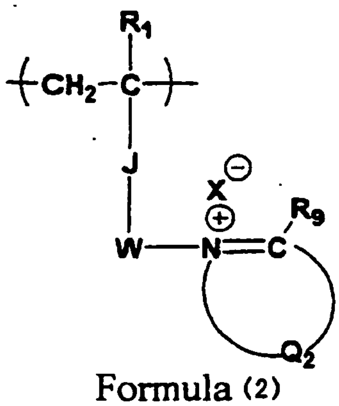

Formula (2)

wherein $R_1$ represents a hydrogen atom or a substituent; $R_6$ to $R_8$ each independently represents a substituent; $R_9$ represents a hydrogen atom or a substituent; J represents -CO-, -COO-, -CONR$^{10}$-, -OCO-, a methylene group, a phenylene group or -$C_6H_4$CO-; $R^{10}$ represents a hydrogen atom, an alkyl group, an aryl group or an aralkyl group; W represents a single bond or a divalent linking group; $Q_2$ represents a group of atoms forming an unsaturated ring together with the carbon atom and the nitrogen atom; and $X^-$ represents an anionic group which balances the cationic charge on the nitrogen atom.

2. A dispersion according to Claim 1, wherein the polymer dispersant has a combination of repeating units represented by one of the following Formulae (3) and (4):

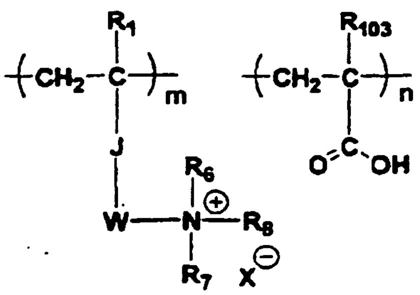

Formula (3)

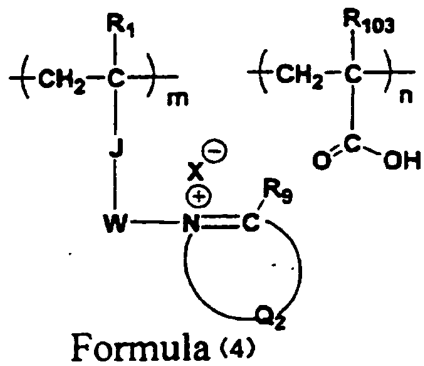

Formula (4)

wherein $R_1$, $R_6$ to $R_{10}$, J, W, $Q_2$ and $X^-$ are as defined in Claim 1; $R_{103}$ represents a hydrogen atom or a substituent; and m and n each independently represents the mass composition ratio of the repeating units.

3. A dispersion according to Claim 2, wherein Formula (3) is represented by one of the following Formulae (5) and (6) :

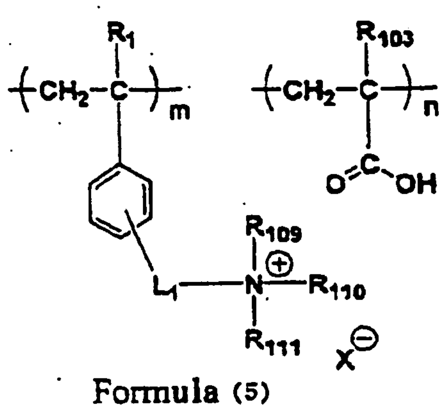

Formula (5)

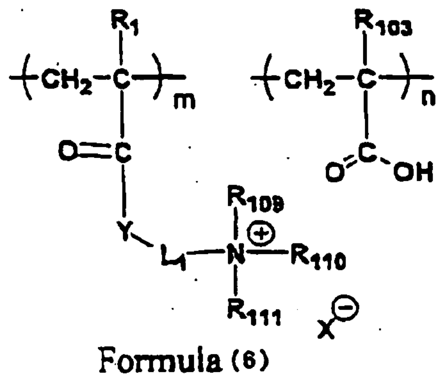

Formula (6)

wherein $R_{109}$ to $R_{111}$ each independently represents a substituted or unsubstituted alkyl group, aryl group or aralkyl group; $L_1$ represents a substituted or unsubstituted alkylene group, ether group, carbonyl group, urethane group, amido group, arylene group or heteroarylene group, the benzene ring connected to $L_1$ in Formula (5) being substituted or unsubstituted; Y represents an oxygen atom, a sulfur atom or $NR_{113}$; $R_{113}$ represents a hydrogen atom or a substituted or unsubstituted alkyl group, alkoxy group, aryl group or heteroaryl group; and $R_1$, $R_{103}$, $X^-$, m and n are as defined in Claim 2.

**4.** A dispersion according to Claim 1 or Claim 2, wherein the polymer dispersant has a combination of repeating units represented by one of the following Formulae (7), (8) and (9):

Formula (7)

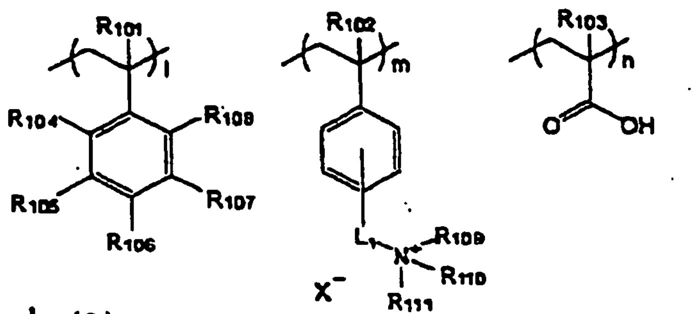

Formula (8)

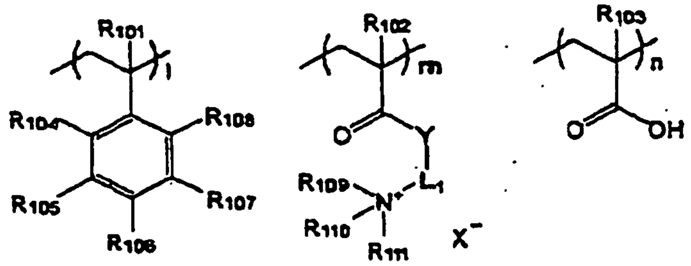

Formula (9)

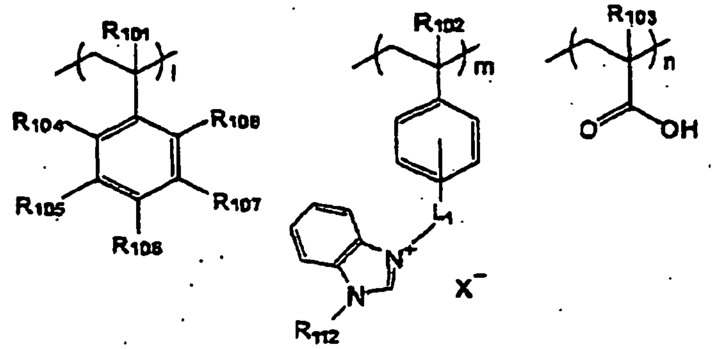

wherein $R_{101}$ to $R_{103}$ each independently represents a hydrogen atom or a methyl group; $R_{104}$ to $R_{108}$ each independently represents a hydrogen atom, a halogen atom, a substituted or unsubstituted alkyl group, alkoxy group, hydroxy group, thioalkoxy group, ester group, amido group, ketone group, cyano group, aryl group or heteroaryl group, members of $R_{104}$ to $R_{108}$ optionally bonding together to form a ring; $R_{109}$ to $R_{111}$ each independently represents a substituted or unsubstituted alkyl group, aryl group or aralkyl group; 1, m and n each independently represents the mass composition ratio of the repeating units, wherein 1 + m + n = 100; $X^-$ represents an anionic group which balances the cationic charge on the nitrogen atom; $L_1$ represents a substituted or unsubstituted alkylene group, ether group, carbonyl group, urethane group, amido group, arylene group or heteroarylene group, the benzene ring connected to $L_1$ in Formula (7) and Formula (9) being substituted or unsubstituted; Y represents an oxygen atom, a sulfur atom or $NR_{113}$; $R_{112}$ represents a substituted or unsubstituted alkyl group, aryl group or aralkyl group, the benzimidazole group connected with $L_1$ in Formula (9) being optionally further substituted; and $R_{113}$ represents a hydrogen atom or a substituted or unsubstituted alkyl group, alkoxy group, aryl group or heteroaryl group.

**5.** A dispersion according to any preceding claim, wherein the cationic group of the polymer dispersant is a quaternary ammonium group.

**6.** A dispersion according to any preceding claim, wherein the volume-averaged diameter of the colorant particles, as measured by dynamic light scattering, is 50 nm or less.

**7.** A recording liquid comprising a dispersion according to any preceding claim, wherein the water-insoluble colorant is contained in the liquid in an amount of 0.1 to 15% by mass with respect to the total mass of the liquid.

**8.** A recording liquid according to Claim 7, wherein the liquid is suitable for inkjet recording.

**9.** An image-forming method comprising the step of recording an image on a medium using a recording liquid according to Claim 7 or Claim 8.

**10.** A method for producing a dispersion as defined in any of Claims 1-5 comprising the steps of:

dissolving a water-insoluble colorant, a polymer dispersant having a cationic group and an acid group, and at least one of a phase transfer base and an inorganic base together in an organic solvent; and
generating fine particles of the water-insoluble colorant by mixing the solution with an aqueous medium.

**11.** A method according to Claim 10, further comprising the steps of:

producing an aggregate of the fine particles of the water-insoluble colorant by mixing the dispersion with at least one of an organic acid and an inorganic acid;
decomposing the aggregate by mixing the aggregate with an aqueous medium and at least one of an organic base and an inorganic base; and
re-dispersing the aggregate.

## Patentansprüche

**1.** Dispersion, umfassend Feinpartikel eines wasserunlöslichen Färbemittels mit einem mittleren Partikeldurchmesser von 10 bis 45 nm, gemessen unter Verwendung eines Transmissionselektronenmikroskops, ein Polymer-Dispergiermittel, das eine kationische Gruppe und eine Säuregruppe aufweist, ein wässriges Medium und mindestens eines von einer Phasentransferbase und einer anorganischen Base, wobei die Dispersion erhältlich ist durch Auflösen des wasserunlöslichen Färbemittels, des Polymer-Dispergiermittels und der Phasentransferbase/anorganischen Base zusammen in einem organischen Lösungsmittel und Bilden der Feinpartikel des wasserunlöslichen Färbemittels durch Mischen der Lösung mit einem wässrigen Medium; worin:

das wasserunlösliche Färbemittel ein organisches Pigment ist, ausgewählt aus organischen Chinacridonpigmenten, organischen Diketopyrrolopyrrolpigmenten und gelben, organischen Mono-azo-Pigmenten;
die Phasentransferbase durch irgendeine der folgenden Formeln (I) und (II) dargestellt ist:

Formel (I) 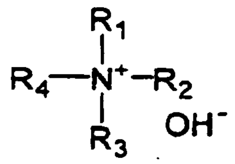

Formel (II) $R_{5(4-k)}$-$N^+$-$(CH_2CH_2OH)_k$ $OH^-$

worin $R_1$ bis $R_5$ jeweils unabhängig eine Alkyl-, Aryl- oder Akylarylgruppe mit 1 bis 10 Kohlenstoffatomen darstellen; und k eine ganze Zahl von 1 bis 4 darstellt; und
das Polymer-Dispergiermittel eine Wiederholungeinheit enthält, die durch eine der folgenden Formel (1) und (2) dargestellt wird:

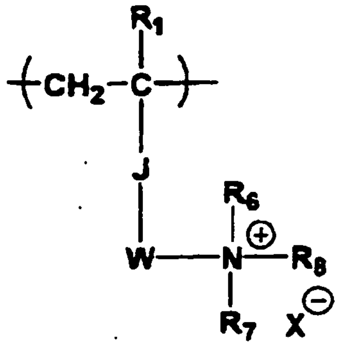

Formel (1)

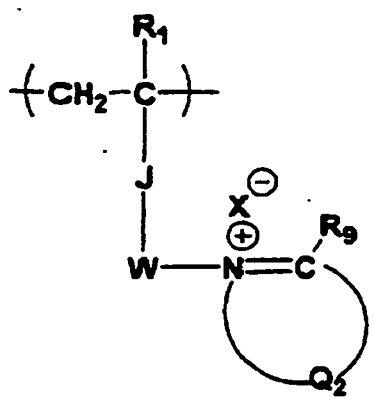

Formel (2)

worin $R_1$ ein Wasserstoffatom oder einen Substituenten darstellt; $R_6$ bis $R_8$ jeweils unabhängig einen Substituenten darstellen; $R_9$ ein Wasserstoffatom oder einen Substituenten darstellt; J -CO-, -COO-, -CONR$^{10}$-, -OCO-, eine Methylengruppe, eine Phenylengruppe oder - $C_6H_4CO$- darstellt; $R^{10}$ ein Wasserstoffatom, eine Alkylgruppe, eine Arylgruppe oder eine Aralkylgruppe darstellt; W wine Einfachbindung oder eine divalente Verknüpfungsgruppe darstellt; $Q_2$ eine Gruppe von Atomen darstellt, die zusammen mit dem Kohlenstoffatom und dem Stickstoffatom einen ungesättigten Ring bildet; und $X^-$ eine anionische Gruppe darstellt, die die kationische Ladung am Stickstoffatom ausgleicht.

**2.** Dispersion gemäß Anspruch 1, worin das Polymer-Dispergiermittel eine Kombination von Wiederholungseinheiten,

die durch eine der folgenden Formel (3) und (4) dargestellt wird, aufweist:

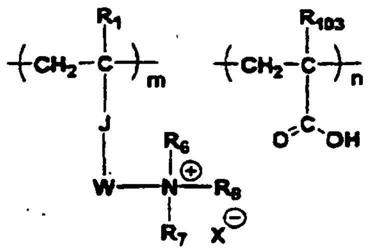

Formel (3)

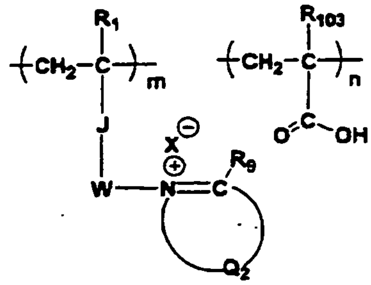

Formel (4)

worin $R_1$, $R_6$ bis $R_{10}$, J, W, $Q_2$ und $X^-$ wie in Anspruch 1 definiert sind; $R_{103}$ ein Wasserstoffatom oder einen Substituenten darstellt; und m und n jeweils unabhängig voneinander das massenbezogene Zusammensetzungsverhältnis der Wiederholungseinheiten darstellen.

**3.** Dispersion gemäß Anspruch 2, worin Formel (3) durch irgendeine der Formeln (5) und (6) dargestellt wird:

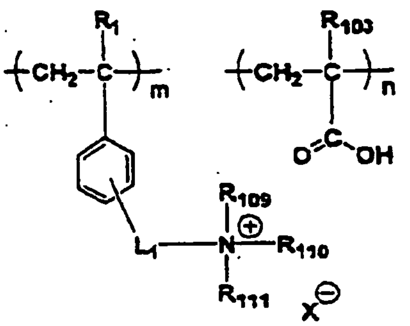

Formel (5)

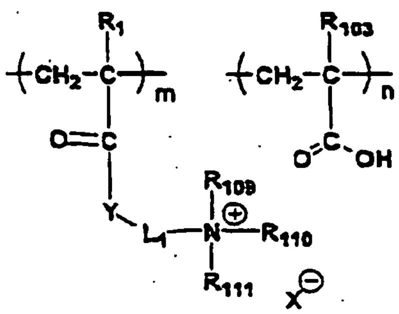

Formel (6)

worin $R_{109}$ bis $R_{111}$ jeweils unabhängig voneinander eine substituierte oder unsubstituierte Alkylgruppe, Arylgruppe oder Aralkylgruppe darstellen; $L_1$ eine substituierte oder unsubstituierte Alkylengruppe, Ethergruppe, Carbonylgruppe, Urethangruppe, Amidogruppe, Arylengruppe oder Heteroarylengruppe darstellt, der an $L_1$ in Formel (5) gebundene Benzolring substituiert oder unsubstituiert ist; Y ein Sauerstoffatom, ein Schwefelatom oder $NR_{113}$ darstellt; $R_{113}$ ein Wasserstoffatom oder eine substituierte oder unsubstituierte Alkylgruppe, Alkoxygruppe, Arylgruppe oder Heteroarylgruppe darstellt; und $R_1$, $R_{103}$, $X^-$, m und n wie in Anspruch 2 definiert sind.

**4.** Dispersion gemäß Anspruch 1 oder Anspruch 2, worin das Polymer-Dispergiermittel eine Kombination von Wiederholungseinheiten aufweist, die durch eine der folgenden Formeln (7), (8) und (9) dargestellt ist:

Formel (7)

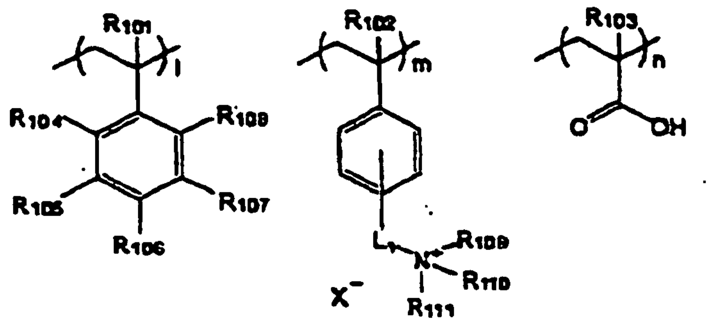

Formel (8)

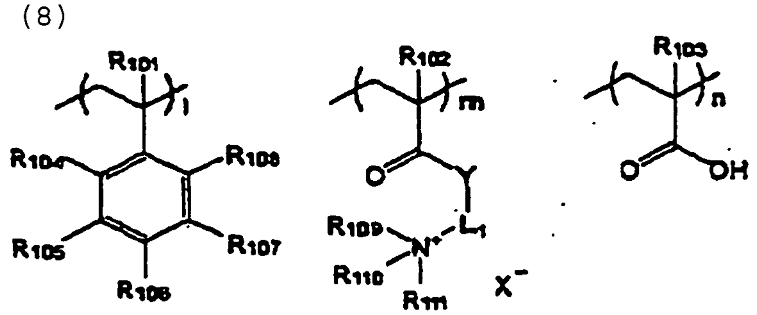

Formel (9)

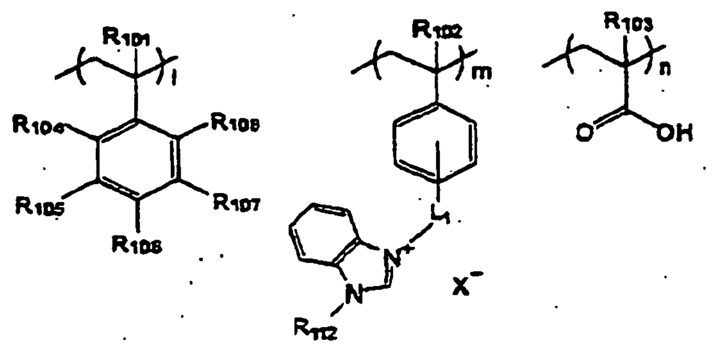

worin $R_{101}$ bis $R_{103}$ jeweils unabhängig voneinander ein Wasserstoffatom oder eine Methylgruppe darstellen; $R_{104}$ bis $R_{108}$ jeweils unabhängig voneinander ein Wasserstoffatom, ein Halogenatom, eine substituierte oder unsubstituierte Alkylgruppe, Alkoxygruppe, Hydroxygruppe, Thioalkoxygruppe, Estergruppe, Amidogruppe, Ketongruppe, Cyanogruppe, Arylgruppe oder Heteroarylgruppe darstellen, Elemente von $R_{104}$ bis $R_{108}$ optional miteinander binden, um einen Ring zu bilden; $R_{109}$ bis $R_{111}$ jeweils unabhängig voneinander eine substituierte oder unsubstituierte Alkylgruppe, Arylgruppe oder Aralkylgruppe darstellen; 1, m und n jeweils unabhängig voneinander das massenbezogene Zusammensetzungverhältnis der Wiederholungseinheiten darstellen, worin 1 + m + n = 100; $X^-$ eine anionische Gruppe darstellt, die die kationische Ladung am Stickstoffatom ausgleicht; $L_1$ eine substituierte oder unsubstituierte Alkylengruppe, Ethergruppe, Carbonylgruppe, Urthangruppe, Amidogruppe, Arlyengruppe oder Heteroarylengruppe darstellt, der an $L_1$ in Formel (7) und Formel (9) gebundene Benzolring substituiert oder unsubstituiert ist; Y ein Sauerstoffatom, ein Schwefelatom oder $NR_{113}$ darstellt; $R_{112}$ eine substituierte oder unsubstituierte Alkylgruppe, Arylgruppe oder Aralkylgruppe darstellt, die Benzimidazolgruppe, die in Formel (9) mit $L_1$ verbunden ist, optional weiter substituiert ist; und $R_{113}$ ein Wasserstoffatom oder eine substituierte oder unsubstituierte Alkylgruppe, Alkoxygruppe, Arylgruppe oder Heterarylgruppe darstellt.

**5.** Dispersion gemäß irgendeinem vorhergehenden Anspruch, worin die kationische Gruppe des Polymer-Dispergiermittels eine quaternäre Ammoniumgruppe ist.

**6.** Dispersion gemäß irgendeinem vorhergehenden Anspruch, worin der volumengemittelte Durchmesser der Färbemittelpartikel, gemessen durch dynamische Lichtstreuung, 50 nm oder weniger beträgt.

**7.** Aufzeichnungsflüssigkeit, umfassend eine Dispersion gemäß irgendeinem vorhergehenden Anspruch, worin das wasserunlösliche Färbemittel in der Flüssigkeit in einer Menge von 0,1 bis 15 Masse% enthalten ist, bezogen auf die Gesamtmasse der Flüssigkeit.

**8.** Aufzeichnungsflüssigkeit gemäß Anspruch 7, worin die Flüssigkeit für die Tintenstrahlaufzeichnung geeignet ist.

**9.** Bilderzeugungsverfahren, umfassend einen Schritt zum Aufzeichnen eines Bildes auf einem Medium unter Verwendung einer Aufzeichnungsflüssigkeit gemäß Anspruch 7 oder Anspruch 8.

**10.** Verfahren zur Herstellung einer Dispersion, wie sie in irgendeinem der Ansprüche 1 bis 5 definiert ist, umfassend die Schritte:

Auflösen eines wasserunlöslichen Färbemittels, eines Polymer-Dispergiermittels, das eine kationische Gruppe und eine Säuregruppe aufweist, und mindestens eines von einer Phasentransferbase und einer anorganischen Base zusammen in einem organischen Lösungsmittel; und
Generieren von Feinpartikeln des wasserunlöslichen Färbemittels durch Mischen der Lösung mit einem wässrigen Medium.

**11.** Verfahren gemäß Anspruch 10, ferner umfassend die Schritte:

Herstellen eines Aggregats der Feinpartikel des wasserunlöslichen Färbemittels durch Mischen der Dispersion mit mindestens einem von einer organischen Säure und einer anorganischen Säure;
Zersetzen des Aggregats durch Mischen des Aggregats mit einem wässrigen Medium und mindestens einem von einer organischen Base und einer anorganischen Base; und
Re-dispergieren des Aggregats.

**Revendications**

**1.** Dispersion comprenant des particules fines d'un colorant insoluble dans de l'eau ayant un diamètre de particule moyen de 10 à 45 nm, tel que mesuré en utilisant un microscope électronique à transmission, un dispersant de polymère ayant un groupe cationique et un groupe acide, un milieu aqueux, et au moins l'une d'une base de transfert de phase et d'une base inorganique, la dispersion pouvant être obtenue en dissolvant le colorant insoluble dans de l'eau, le dispersant de polymère et la base de transfert de phase / base inorganique ensemble dans un solvant organique et en générant des particules fines du colorant insoluble dans l'eau en mélangeant la solution avec un milieu aqueux ;
dans laquelle :

le colorant insoluble dans de l'eau est un pigment organique sélectionné parmi des pigments organiques de quinacridone, des pigments organiques de dikétopyrrolopyrrole et des pigments organiques jaunes monoazoïques ;
la base de transfert de phase est représentée par une des Formules suivantes (I) et (II) :

Formule (I)

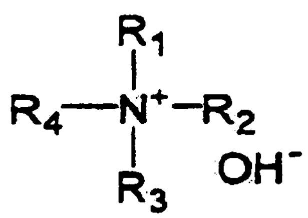

Formel (II) $R_{5}(_{4-k})-N^{+}-(CH_2CH_2OH)_k\ OH^{-}$

dans lesquelles $R_1$ à $R_5$ représentent chacun indépendamment un groupe alkyle, aryle ou alkylaryle ayant de 1 à 10 atomes de carbone ; et k représente un entier de 1 à 4 ; et
le dispersant de polymère contient une unité de répétition représentée par une des Formules suivantes (1) et (2) :

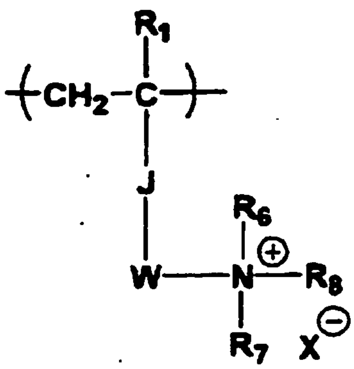

Formule (1)

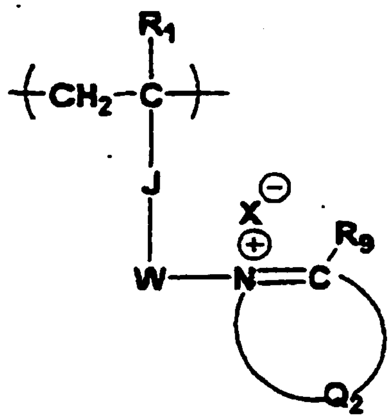

Formule (2)

dans lesquelles $R_1$ représente un atome d'hydrogène ou un substituant ; $R_6$ à $R_8$ représentent chacun indépendamment un substituant ; $R_9$ représente un atome d'hydrogène ou un substituant ; J représente -CO-, -COO-, $-CONR^{10}-$, -OCO- un groupe méthylène, un groupe phénylène ou $-C_6H_4CO-$ ; $R^{10}$ représente un atome d'hydrogène, un groupe alkyle, un groupe aryle ou un groupe aralkyle ; W représente une liaison simple ou un groupe de liaison divalent ; $Q_2$ représente un groupe d'atomes formant un anneau non saturé ensemble avec l'atome de carbone et l'atome d'azote ; et $X^-$ représente un groupe anionique qui équilibre la charge cationique sur l'atome d'azote.

**2.** Dispersion selon la revendication 1, dans laquelle le dispersant de polymère a une combinaison d'unités de répétition représentées par une des Formules suivantes (3) et (4) :

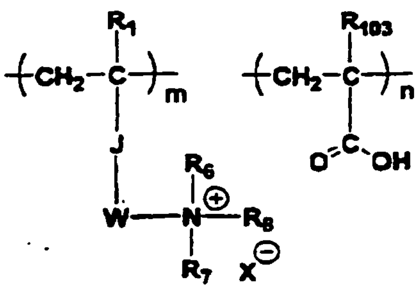

Formule (3)

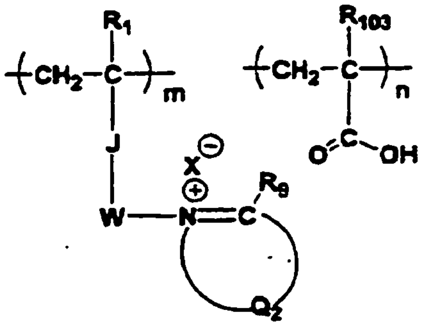

Formule (4)

dans lesquelles $R_1$, $R_6$ à $R_{10}$, J, W, $Q_2$ et $X^-$ sont tels que définis dans la revendication 1 ; $R_{103}$ représente un atome d'hydrogène ou un substituant ; et m et n représentent chacun indépendamment le rapport de composition en masse des unités de répétition.

**3.** Dispersion selon la revendication 2, dans laquelle la Formule (3) est représentée par une des Formules suivantes (5) et (6) :

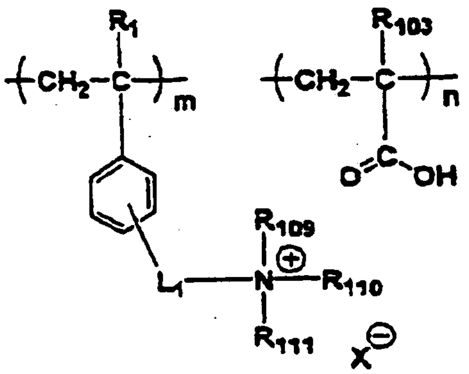

Formule (5)

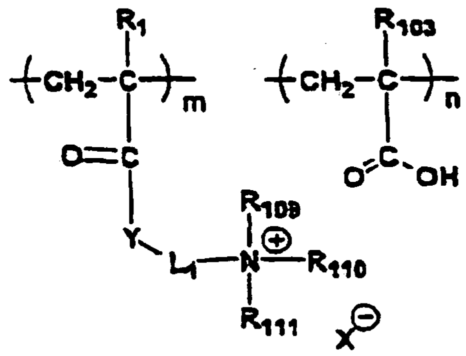

Formule (6)

dans lesquelles $R_{109}$ à $R_{111}$ représentent chacun indépendamment un groupe alkyle substitué ou non substitué, un groupe aryle ou un groupe aralkyle ; $L_1$ représente un groupe alkylène substitué ou non substitué, un groupe éther, un groupe carbonyle, un groupe uréthane, un groupe amido, un groupe arylène ou un groupe hétéroarylène, l'anneau de benzène relié à $L_1$ dans la Formule (5) étant substitué ou non substitué ; Y représente un atome d'oxygène, un atome de soufre ou $NR_{113}$ ; $R_{113}$ représente un atome d'hydrogène ou un groupe alkyle substitué ou non substitué, un groupe alcoxy, un groupe aryle ou un groupe hétéroaryle ; et $R_1$, $R_{103}$, $X^-$, m et n sont tels que définis dans la revendication 2.

**4.** Dispersion selon la revendication 1 ou la revendication 2, dans laquelle le dispersant de polymère a une combinaison d'unités de répétition représentées par une des Formules suivantes (7), (8) et (9) :

Formule (7)

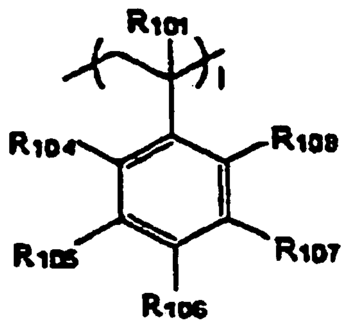

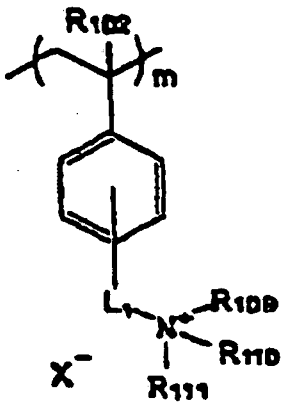

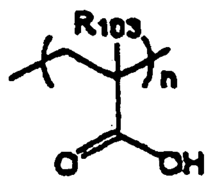

Formule (8)

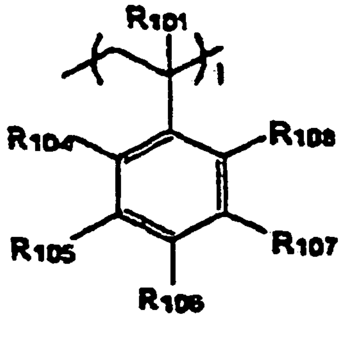

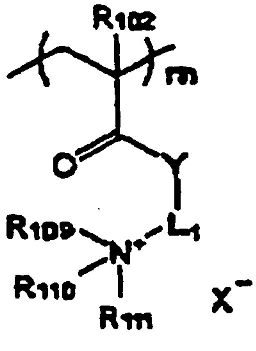

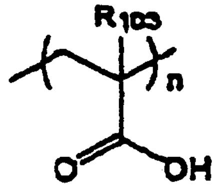

Formule (9)

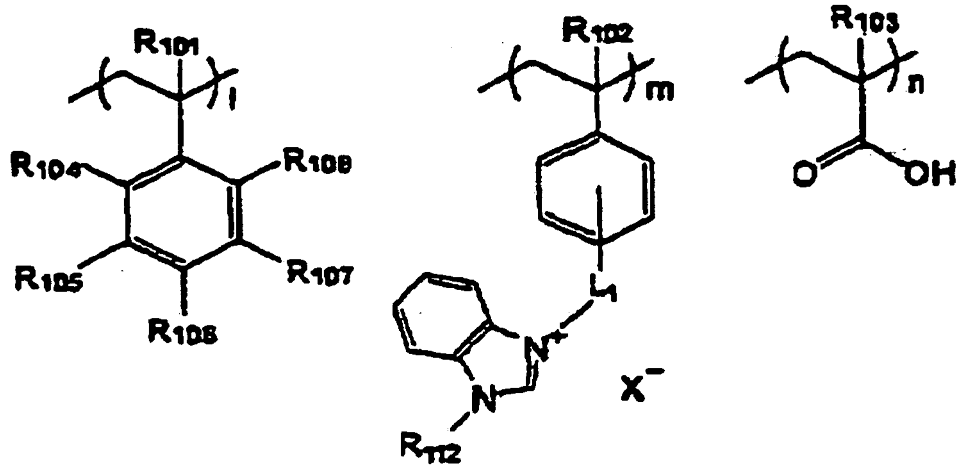

dans lesquelles $R_{101}$ à $R_{103}$ représentent chacun indépendamment un atome d'hydrogène ou un groupe méthyle ; $R_{104}$ à $R_{108}$ représentent chacun indépendamment un atome d'hydrogène, un atome d'halogène, un groupe alkyle substitué ou non substitué, un groupe alcoxy, un groupe hydroxy, un groupe thioalkoxy, un groupe ester, un groupe amido, un groupe cétone, un groupe cyano, un groupe aryle ou un groupe hétéroaryle, des éléments de $R_{104}$ à $R_{108}$ se liant optionnellement ensemble pour former un composé cyclique ; $R_{109}$ à $R_{111}$ représentent chacun indépendamment un groupe alkyle substitué ou non substitué, un groupe aryle ou un groupe aralkyle ; 1, m et n représentent chacun indépendamment le rapport de composition en masse des unités de répétition, dans lesquelles 1 + m + n = 100 ; $X^-$ représente un groupe anionique qui équilibre la charge cationique sur l'atome d'azote ; $L_1$ représente un groupe alkylène substitué ou non substitué, un groupe éther, un groupe carbonyle, un groupe uréthane, un groupe amido, un groupe arylène ou un groupe hétéroarylène, l'anneau de benzène relié à $L_1$ dans la Formule (7) et la Formule (9) étant substitué ou non substitué ; Y représente un atome d'oxygène, un atome de soufre ou $NR_{113}$ ; $R_{112}$ représente un groupe alkyle substitué ou non substitué, un groupe aryle ou un groupe aralkyle, le groupe benzimidazole relié à $L_1$ dans la Formule (9) étant en outre substitué optionnellement ; et $R_{113}$ représente un atome d'hydrogène ou un groupe alkyle substitué ou non substitué, un groupe alcoxy, un groupe aryle ou un groupe hétéroaryle.

**5.** Dispersion selon l'une quelconque des revendications précédentes, dans laquelle le groupe cationique du dispersant de polymère est un groupe ammonium quaternaire.

**6.** Dispersion selon l'une quelconque des revendications précédentes, dans laquelle le diamètre moyen en volume des particules de colorant, tel que mesuré par dispersion de lumière dynamique, est de 50 nm ou moins.

**7.** Liquide d'enregistrement comprenant une dispersion selon l'une quelconque des revendications précédentes, dans lequel le colorant insoluble dans de l'eau est contenu dans le liquide en une quantité de 0,1 à 15 % en masse par rapport à la masse totale du liquide.

**8.** Liquide d'enregistrement selon la revendication 7, dans lequel le liquide est approprié pour un enregistrement à jet d'encre.

**9.** Procédé de formation d'image comprenant l'étape d'enregistrement d'une image sur un support en utilisant un liquide d'enregistrement selon la revendication 7 ou la revendication 8.

**10.** Procédé pour produire une dispersion selon l'une quelconque des revendications 1 à 5, comprenant les étapes consistant à:

dissoudre un colorant insoluble dans de l'eau, un dispersant de polymère ayant un groupe cationique et un groupe acide, et au moins l'une d'une base de transfert de phase et d'une base inorganique ensemble dans un solvant organique ; et
générer des fines particules du colorant insoluble dans de l'eau en mélangeant la solution avec un milieu aqueux.

**11.** Procédé selon la revendication 10, comprenant en outre les étapes consistant à :

produire un agrégat des fines particules du colorant insoluble dans de l'eau en mélangeant la dispersion avec au moins l'un d'un acide organique et d'un acide inorganique ;
décomposer l'agrégat en mélangeant l'agrégat avec un milieu aqueux et au moins l'une d'une base organique et d'une base inorganique ; et
redisperser l'agrégat.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006057044 A
- JP 2006328262 A
- JP 60035055 A
- JP 2003026972 A
- JP 2004043776 A
- JP 2006342316 A
- JP 2007119586 A


### Non-patent literature cited in the description


- **A. Leo.** Comprehensive Medical Chemistry. Pergramon Press, 1990, vol. 4, 295